# EUROPEAN PATENT APPLICATION

(11) **EP 3 363 918 A1**
(43) Date of publication of application: **22.08.2018**
(21) Application number: 16855824.5
(22) Date of filing: 15.08.2016
(51) Int. Cl.: C22B 5/02, C22B 15/00

(54) **METHOD FOR EXTRACTING METALS FROM CONCENTRATED SULPHURATED MINERALS CONTAINING METALS BY DIRECT REDUCTION WITH REGENERATION AND RECYCLING OF THE REDUCING AGENT, IRON, AND OF THE FLUX, SODIUM CARBONATE**

(30) Priority: 16.10.2015 PE 0021852015
(71) Applicant: Cárdenas Arbieto, Francisco Javier, La Molina, Lima 12 (PE)
(72) Inventor: Cárdenas Arbieto, Francisco Javier, La Molina, Lima 12 (PE)
(74) Representative: Herrero & Asociados, S.L.
(86) International application number: PCT/PE2016/000014
(87) International publication number: WO 2017/065622

(57) **Abstract**

The invention entitled "Method for extracting metals prom concentrated sulphurated minerals containing metals by direct reduction with regeneration and recycling of the reducing agent, iron, and of the flux, sodium carbonate" is presented as an alternative to conventional processes for extracting ferrous and non-ferrous metals from sulphurated minerals containing them, applying the improved direct reduction process, i.e. without sulphur dioxide emissions and without producing the slag generated by conventional metallurgy, thus minimizing environmental pollution. In addition, operating costs of the metallurgical process are substantially reduced by regenerating and recycling the reducing agent, iron, and the flux, sodium carbonate.

Nowadays, the extraction of metals from mining activity is carried out by conventional and modern processes. On the one hand, we find conventional pyrometallurgical processes, which involve the previous toasting of the mineral before extracting metals in furnaces, and on the other hand, combined pyro, hydro and electrometallurgical processes, in which sulphurated minerals are toasted first, and the dissolved metal to be extracted is then leached and electro-deposited. These processes are highly polluting, though. With respect to modern processes, we find biometallurgy, which uses bacteria for the extraction of metal, with the disadvantage of being slow processes. On the other hand, hydrometallurgy is also used at high pressure, which involves high investment and operating costs.

The new metallurgical process consists of:
- Extraction of metals in the smelting furnace using iron as a reducing agent and sodium carbonate as a flux
- Selective dissolution in water of sodium sulphide from slag and filtering of waste, ferrous oxide
- Regeneration of sodium carbonate for recycling
- Removal of hydrogen sulphide gas and obtaining elemental sulphur
- Sintering of ferrous oxide agglomerates for subsequent reduction of iron metal
- Generation of reducing gases, carbon monoxide and hydrogen
- Regeneration of metal iron for recycling from ferrous oxide

The proposed technological innovation combines novel pyrometallurgical and hydrometallurgical processes, different from conventional ones, which do not require a prior toasting of the sulphurated mineral concentrate, and are technically and economically more advantageous than the currently used processes because it reduces to zero the positive oxidation state of the metal directly, using a single reactor for the extraction of metal. It regenerates and recycles metallurgical inputs with complementary processes, with a high speed in the kinetics of chemical reactions and, all this, without generating slag or polluting gases. As a result, the extraction of metals is achieved at a low operating cost, in an environmentally sustainable manner, thus avoiding high costs for environmental remediation.

It is important to point out that the proposed invention can also be applied to the treatment of tailings and environmental liabilities, solving a problem that has been accumulating for years due to mining activity that is not very environmentally responsible and which, until now, has not been possible to remedy due to the high costs involved.

Consequently, by applying this process, the economic viability of mining projects is increased, even under a scenario of lower metal prices. The process involved allows mining companies to obtain lower cut-offs and cash costs for their extractive activity and, in turn, allows them to generate higher revenues from the export of metals, rather than the export of mineral concentrates. In addition, as it is a clean and environmentally friendly technology, it allows mine closure costs to be radically reduced. As a result, this process provides a higher level of profitability and sustainability of mining activity.

On the other hand, with a gradual implementation of the proposed process in mining activity, the Government will benefit thanks to the increase in the Trade Balance, resulting from increased exports, and to the higher tax revenue that will be generated by higher business income. This, in turn, positively affects regional and local governments for the higher revenues that will be generated from mining royalties. Increased mining activity will imply greater sources of direct and indirect employment generation, as well as boosting other sectors of the economy, such as the steel, metalworking and construction industries. Added to this are the lower costs of remediation of environmental liabilities. In short, it has the potential to generate higher incomes for the Government, and thus greater socio-economic well-being for the population.

The advantages of this technological innovation in the environmental field range from the regeneration and recycling of inputs, and the elimination of slag and polluting gases from the extractive process, to the remediation of tailings from current mining activity as well as existing environmental liabilities, resulting in less pollution of rivers, agricultural fields and less impact on natural reserves. In other words, it significantly reduces the environmental footprint of mining activity.

Finally, and as a consequence of the aforementioned, this invention manages to improve health standards in the population adjacent to the mines by reducing emissions and toxic waste, as well as by eliminating risks derived from the potential rupture of dams in tailings. Similarly, mining activity, by ceasing to interfere with the population's agricultural, fishing and livestock activities, reduces the possible emergence of social conflicts, thus allowing the viability of mining projects to increase, which in turn translates into greater social works and an increase in the income of the surrounding population. In conclusion, this innovative process for the extraction of metals has the capacity to generate harmony between mining activity, the environment and the population.

## Description

### TECHNICAL FIELD

The technical field relevant to apply the developed invention is mining and metallurgy, since it allows extracting ferrous and non-ferrous metals from sulphurated minerals bearing them by applying an improved direct reduction process, with no emissions of sulphur dioxide and without producing slag, which is commonly produced by conventional pyrometallurgical plants, thus minimizing environmental pollution. In addition, through the proposed regeneration and recycling of iron as reducing agent and sodium carbonate as flux, the operating costs of the process are substantially reduced.

### STATE OF THE ART (OR BACKGROUND OF INVENTION)

According to Aranguren F & Mallol A. (1), several metallurgical reduction processes were known and applied for some time in metal extraction activities. Among them, the reduction of iron oxide minerals (mainly, hematite and magnetite) stands out for its relevance, since it allows to obtain pig iron or direct-reduced iron, metallurgical products from which steel can be obtained, depending on the technique applied. In these cases, coal or metallurgical coke and/or carbon monoxide and/or hydrogen gas and/or natural gas are required as reducing agents; limestone and dolomite are required as alkaline fluxes, where, at the same time as the main process occurs, the reduction of other elements takes place in the same reactor, elements such as silicon, titanium, manganese, chromium, vanadium, among others, always from its oxidized compounds. The following are established as essential chemical reactions in the reduction process applied to oxidized iron minerals:

3Fe₂O₃ + CO → 2Fe₃O₄ + CO₂

Fe₃O₄ + CO → 3FeO + CO₂

FeO + CO → Fe + CO₂

Similarly, as indicated by Aranguren & Mallol (2), in 1620 the first furnace for iron minerals processing was built in the United States of America. Later, during several centuries and until the creation of comprehensive plants, which included the production of pig iron and metallurgical coke, the iron and steel industry commonly used producer gas as fuel, which performed a dual function, both as heating agent and reducing agent. Producer gas was produced by total gasification of a solid fuel, such as bituminous coal, anthracite, lignite, or the same coke, being able to produce the gasification with air alone, air and water vapor, or also with oxygen and water vapor. The fundamental reactions that occur in a gas-powered reactor are shown below:

C + O₂ → CO₂

C + CO₂ → 2CO

C + H₂O → CO + H₂

C + 2H₂O → CO₂ + 2H₂

CO + H₂O → CO₂ + H₂

2C + 2H₂O → CH₄ + 2CO

Improving the already known reduction process of iron minerals and using carbon monoxide as reducing agent, in 1918 Wieber (3) proposed that gases resulting from iron minerals reduction, mainly carbon dioxide with residual carbon monoxide used as reducing agent, to be conducted to another reactor where coal combustion shall occur. This would generate more carbon monoxide from the same recycled carbon dioxide and from coal, reducing the consumption of the latter.

Given that the above-mentioned improved process requires the use, to a noticeable extent, of hydrogen gas as a reducing agent due to its greater heating power, the presence of hydrogen gas in the percentage composition of reducing gases should correspond to a range between 20% and 35%, which can be achieved if natural gas is used in a complementary manner, with a reaction to water vapor at high temperatures of:

CH₄ + H₂O → 3H₂ + CO

being feasible to reduce iron oxide minerals with hydrogen gas using the following fundamental reactions:

3Fe₂O₃ + H₂ → 2Fe₃O₄ + H₂O

Fe₃O₄ + H₂ → 3FeO + H₂O

FeO + H₂ → Fe + H₂O

On the other hand, the conventional techniques currently used to extract non-ferrous common metals (lead, copper, zinc, antimony, etc.) from their sulphurated minerals consist of toasting them to obtain oxidized compounds of the above-mentioned metals to, subsequently, apply pyrometallurgical processes to extract lead, copper, zinc, antimony, etc.; or, alternatively, hydro-electrometallurgical processes, as in the case of zinc extraction, being the following reactions fundamental in the pyrometallurgical extraction of non-ferrous common metals (4):

2PbS + 3O₂ ⇄ 2PbO + 2SO₂

2PbO + C ⇄ 2Pb + CO₂

2Cu₂S + 3O₂ ⇄ 2Cu₂O + 2SO₂

2Cu₂O + C ⇄ 4Cu + CO₂

2ZnS + 3O₂ ⇄ 2ZnO + 2SO₂

2ZnO + C ⇄ 2Zn + CO₂

2Sb₂S₃ + 9O₂ ⇄ 2Sb₂O₃ + 6SO₂

2Sb₂O₃ + Sb₂S₃ ⇄ 6Sb + 3SO₂

One of the characteristics of the plants implementing these latest processes is the large amount of emissions of sulphur dioxide they generate, forcing them to install expensive sulphuric acid manufacturing plants to minimize environmental pollution, as well as great amounts of slag, which are stockpiled near the metallurgical plants, polluting the environment in the area of influence.

In the same way, it is also known that coal gas (by-product of blast-furnace coke furnaces) contains hydrogen sulphide gas, which is one of the components that should be removed before its usage. An alternative is to pass the hydrogen sulphide gas through a mass of hydrated iron oxide to obtain the following reaction (5):

Fe₂(OH)₆ + 3H₂S ⇄ Fe₂S₃ + 6H₂O

therefore, when the mass of hydrated iron oxide is saturated with sulphur, the compounds generated are aerated, obtaining not only elemental sulphur (S), but also the regeneration of hydrated iron oxide due to the following reaction caused by the presence of oxygen and water:

Fe₂S₃ + 3H₂O + 3/2O₂ ⇄ Fe₂(OH)₆ + 3S

It is known that only in 1823 the first plant of sodium carbonate production on an industrial scale was established in England, applying the process conceived by Nicolas Leblanc (6), which was used up to 1885, approximately. The following are the main chemical reactions of the above-mentioned process:

NaCl + H₂SO₄ → NaHSO₄ + HCl

NaCl + NaHSO₄ → Na₂SO₄ + HCl

Na₂SO₄ + 2C → Na₂S + 2CO₂

Na₂S + CaCO₃ → Na₂CO₃ + CaS

In 1861, Ernest Solvay (7) developed the process named after him, which quickly became the leading process to produce sodium carbonate worldwide. The first industrial plant that applied this process was settled in Belgium in 1865. Later, in 1874, another plant was established in England and, in 1882, the largest plant at the time was implemented in the United States of America, which continues to operate nowadays. Then, in 1988, the world largest sodium carbonate industrial production plant was settled in France and used the Solvay Process, which has the following main chemical reactions:

CaCO₃ → CaO + CO₂

CaO + H₂O → Ca(OH)₂

NH₃ + CO₂ + H₂O + NaCl → NaHCO₃ + NH₄Cl

2NaHCO₃ → Na₂CO₃ + H₂O + CO₂

Ca(OH)₂ + 2NH₄Cl → 2H₂O + CaCl₂ + 2NH₃

In Peru, since 1955 (8), studies analyzing the possibility of implementing a sodium carbonate plant were carried out. However, it was in 1978 (9) that the implementation of a sodium carbonate plant was envisaged, and then became effective and started to operate in 1988 (10); this technology was known as the Soda - Carbon Dioxide Gas Process, which is based on the following chemical reaction:

2NaOH + CO₂ → Na₂CO₃+ H₂O

### DESCRIPTION OF INVENTION

The technological innovation developed allows extracting, in addition to iron, metals such as, but not limited to, lead, silver, zinc, copper, molybdenum, antimony, arsenic, with or without associated iron, and with gold that could be hosted as inclusion in certain cases, from sulphurated minerals containing them. For this purpose, an improved direct reduction process is applied to the metals to be extracted, which is achieved without sulphur dioxide emissions nor producing slags commonly generated by conventional pyrometallurgical plants, thus minimizing environmental pollution. In addition, through the proposed regeneration and recycling of iron as reducing agent and sodium carbonate as flux, the operating costs of the process are substantially reduced.

This technology can be also applied to the remediation of tailings deposits containing various ferrous and non-ferrous metal sulphides. Currently, the metallurgical mining matrix worldwide states that concentration plants only recover, through a selective flotation process, metallic sulphides with commercial value, such as argentiferous galena: PbS bearing Ag, chalcopyrite: CuFeS₂ bearing Au, and sphalerite: ZnS, leaving great amounts of iron sulphides in the tailings, such as pyrite, pyrrhotite, and arsenopyrite, which are depressed in flotation cells together with non-metallic minerals extracted from mine, mainly quartz (SiO₂) and other silicates, which are stockpiled in tailings deposits under inadequate conditions in most cases. This is one of the main reasons the abovementioned tailings deposits are very likely to generate pollutants such as arsenical and acidic water in rainy seasons, due to the high amount of arsenic and iron sulphides they contain.

The remediation of the tailings of these concentration plants registered as mining environmental liabilities would only be feasible if we take economic advantage of most mineral species existing in said tailings, trying to mainly recover the metallic mineral species disposed, such as pyrite, pyrrhotite, and arsenopyrite, not only because these minerals, part of the main pollutant species, can have important values of gold and silver, but also because they can serve as raw material for obtaining metallic iron by using this low-cost technological innovation with minimal environmental impact; thus, iron becomes a metallurgical product with significant commercial value from which steel can be obtained for the construction and metal-mechanic industries.

In addition, other residual metallic sulphides of commercial value might be also recovered through selective flotation, provided that these are contained in the tailings deposits. It is important to take them into account, not only because that would help to increase the income from the sale of non-ferrous metals to be obtained, which would be extracted from sulphurated minerals bearing them through the technological innovation developed, but also because the application of this invention would finally allow to obtain truly clean solid waste that might be used in the construction industry as an aggregate (fine sand) or raw material for white bricks manufacturing.

In the smelting furnace considered for this process, the concentrated sulphurated minerals, bearing the metal or metals to be extracted, are smelted, as the case may be. For this purpose, iron is used as reducing agent and sodium carbonate as flux, resulting in smelted or powdered metal or metals, depending on their physical properties, a slag of controlled composition formed by ferrous oxide and sodium sulphide, and gaseous emissions of carbon dioxide. In order to have an effective control of the slag composition, which is essential to regenerate and recycling the reducing agent and flux, general reactions are established for the cases below, considering the following general definitions:
- **Fe** is a reactive element with an oxidation number of zero; when added to the main reactor, it acts as a reducing agent or facilitator for the atomic exchange between sulphur and sodium, where applicable.
- **Na₂CO₃** is a reactive chemical compound known as sodium carbonate, which is added to the main reactor as flux.
- **Na₂S** is one of the slag components, known as sodium sulphide, obtained from the general chemical reaction; it is highly water-soluble.
- **FeO** is another slag component known as ferrous oxide, obtained from the general chemical reaction; it is water insoluble.
- **CO₂** is the gaseous effluent known as carbon dioxide, obtained from the general chemical reaction.

### a. For single-metal non-ferrous sulphurated minerals:

MₓS_{y} + yFe + yNa₂CO₃ → xM + yNa₂S + yFeO + yCO₂

Where:
- **M** is the non-ferrous metal to be extracted, such as, but not limited to, lead, silver, zinc, copper, molybdenum, antimony.
- **MₓS_{y}** is the chemical formula for the sulphurated mineral from which the M metal is going to be extracted.
- **x** and **y** indicate the number of M metal atoms existing in MₓS_{y} to be extracted, and those of sulphur, respectively, existing in MₓS_{y}; the stoichiometric coefficients of the remaining reactants and those of the products obtained in the process, depend on its values.

### b. For single-metal ferrous sulphurated minerals:

MₓFe_{y}S_{z} + (z-y)Fe + zNa₂CO₃ → xM + zNa₂S + zFeO+ zCO₂

Where:
- **M** is the non-ferrous metal to be extracted, such as, but not limited to, copper, arsenic, lead, zinc.
- **MₓFe_{y}S_{z}** is the chemical formula established for the ferrous sulphurated mineral from which the M metal is going to be extracted.
- **x, y, z** refers to the number of M metal atoms existing in MₓFe_{y}S_{z} to be extracted, those of iron and sulphur, respectively; the stoichiometric coefficients of the remaining reactants and those of the products obtained in the process, depend on its values.

### c. For single-metal sulphurated minerals, ferrous and/or non-ferrous, with Gold and/or Silver:

MₓFe_{y}S_{z}+ (Au,Ag)ₘ + nPb + (z-y)Fe + zNa₂CO₃ → → xM + m(Au,Ag) + nPb + zNa₂S + zFeO + zCO₂

Where:
- **M** is the non-ferrous metal to be extracted, such as, but not limited to, copper, arsenic, lead, zinc.
- **MₓFe_{y}S_{z}** is the chemical formula established for the ferrous and non-ferrous sulphurated mineral (for y = 0) from which the M metal and other precious metals associated will be extracted.
- **x, y, z** indicate the number of M metal atoms to be extracted, those of iron and sulphur, respectively, existing in MₓFe_{y}S_{z}; the stoichiometric coefficients of the other reactants and those of the products obtained in the process, depend on its values.
- **(Au,Ag)ₘ** represent the inclusions of Gold (Au), Silver (Ag) and Electrum (Au/Ag) that are shown within the MₓFe_{y}S_{z} mineral matrix in an "m" number.
- **Pb** represents the Lead metal, which in "n" quantity is added along with reactants, in order to be the final bearer of Gold and Silver.

### d. For combinations of several single-metal sulphurated minerals, ferrous and/or non-ferrous:

[(M1)ₐFe_{b}S_{c} + (c-b)Fe + cNa₂CO₃] + [(M2)ₓFe_{y}S_{z} + (z-y)Fe + zNa₂CO₃] → → a(M1) + x(M2) + (c+z)Na₂S + (c+z)FeO + (c+z)CO₂

which expressed in another way is equal to:

(M1)ₐFe_{b}S_{c} + (M2)ₓFe_{y}S_{z} + [(c-b) + (z-y)]Fe + (c+z)Na₂CO₃ → → a(M1) + x(M2) + (c+z)Na₂S + (c+z)FeO + (c+z)CO₂

Where:
- **M1 and M2** are the non-ferrous metals to be extracted, such as, but not limited to, copper, arsenic.
- **(M1)ₐFe_{b}S_{c}** and **(M2)ₓFe_{y}S_{z}** are the chemical formulas established for the ferrous and/or non-ferrous sulphurated minerals (for y = 0) from which non-ferrous metals M1 and M2 will be extracted.
- Subscripts **a, b, c,** as well as **x, y, z** indicate the atoms numbers involving both, metals M1 and M2, as well as the Iron and Sulphur existing in (M1)ₐFe_{b}S_{c} and (M2)ₓFe_{y}S_{z}, respectively. The stoichiometric coefficients of the remaining reactants (reducing agent and flux) and those of the products obtained in the process (molten metals, slag, and gaseous effluent), depend on its values.

### e. For bimetallic sulphurated minerals, ferrous and/or non-ferrous:

(M1)ₐ(M2)_{b}Fe_{y}S_{z} + (z-y)Fe + zNa₂CO₃ → a(M1)b(M2) + zNa₂S + zFeO + zCO₂

Where:
- **M1 and M2** are the non-ferrous metals to be extracted, such as, but not limited to, antimony, zinc, copper, silver, arsenic, cobalt.
- **(M1)ₐ(M2)_{b}Fe_{y}S_{z}** is the chemical formula established for the ferrous and non-ferrous sulphurated mineral (for y = 0) from which non-ferrous metals M1 and M2 will be extracted.
- Subscripts **a, b,** as well as **y, z,** indicate the atoms numbers involving both, metals M1 and M2, as well as the Iron and Sulphur, respectively, existing in (M1)ₐ(M2)_{b}Fe_{y}S_{z}. The stoichiometric coefficients of the remaining reactants (reducing agent and flux) and those of the products obtained in the process (molten metals, slag, and gaseous effluent), depend on its values.

### f. For combinations of bimetallic sulphurated minerals, ferrous and/or non-ferrous:

[(M1)ₐ(M2)_{b}Fe_{c}S_{d} + (M3)_{w}(M4)ₓFe_{y}S_{z} + [(d-c)+(z-y)]Fe + (d+z)Na₂CO₃] → → a(M1) + b(M2) + w(M3) x (M4) + (d+z)Na₂S + (d+z)FeO + (d+z)CO₂

Where:
- **M1, M2, M3 and M4** are the non-ferrous metals to be extracted, such as, but not limited to, antimony, zinc, copper, silver, arsenic, cobalt.
- (M1)ₐ(M2)_{b}Fe_{c}S_{d} and (M3)_{w}(M4)ₓFe_{y}S_{z} are the chemical formulas established for the ferrous and non-ferrous sulphurated minerals from which non-ferrous metals M1, M2, M3, and M4 will be extracted.
- Subscripts **a, b, c, d,** as well as **w, x, y, z,** indicate the atoms numbers involving both, metals M1, M2, M3, and M4, as well as the Iron and Sulphur, respectively, existing in (M1)ₐ(M2)_{b}Fe_{c}S_{d} and (M3)_{w}(M4)ₓFe_{y}S_{z}. The stoichiometric coefficients of the remaining reactants (reducing agent and flux) and those of the products obtained through the process (molten metals, slag, and gaseous effluent), depend on its values.

It should be noted that the above-mentioned stoichiometric formulation is valid even when some (or all) of the following cases occur:
- When chemical formulas of bimetallic sulphurated minerals contain a non-ferrous metal in common, i.e., when (M1, M2) is partially equal to (M3, M4).
- When in the combination of bimetallic sulphurated minerals, one of the sulphurated minerals is ferrous and the other sulphurated mineral is non-ferrous.

In this sense, the simultaneous presence of both cases mentioned above, would have the following stoichiometric formulation, where M4=M2, and y=0:

[(M1)ₐ(M2)_{b}Fe_{c}S_{d} + (M3)_{w}(M2)ₓS_{z} + [(d-c)+(z)]Fe + (d+z)Na₂CO₃] → → a(M1) + (b+x)(M2) + w(M3) + (d+z)Na₂S + (d+z)FeO + (d+z)CO₂

### BRIEF DESCRIPTION OF DRAWINGS

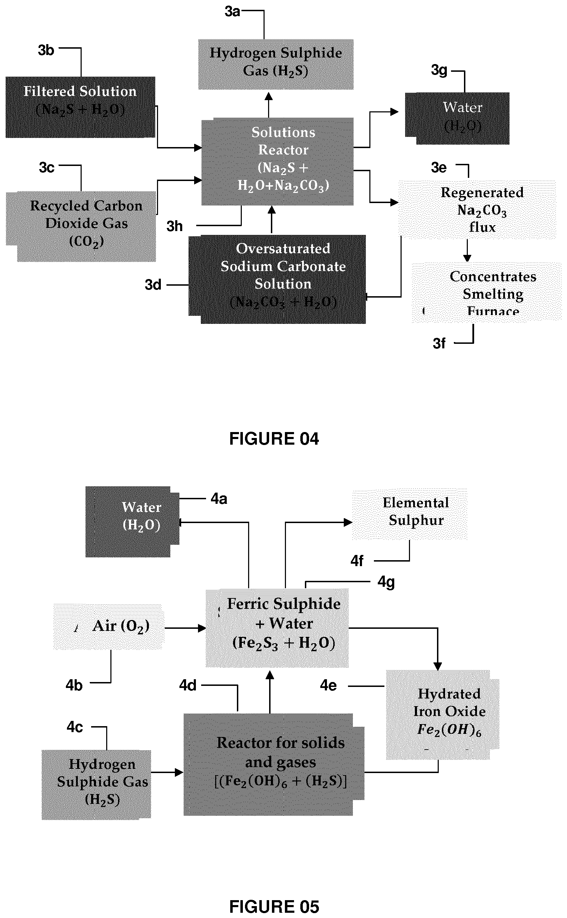

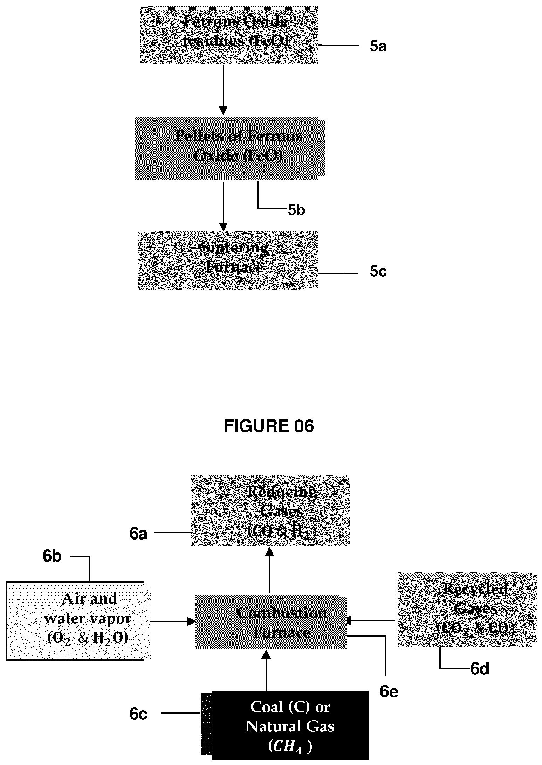

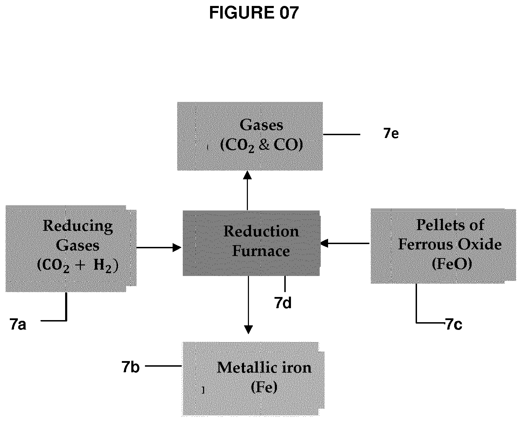

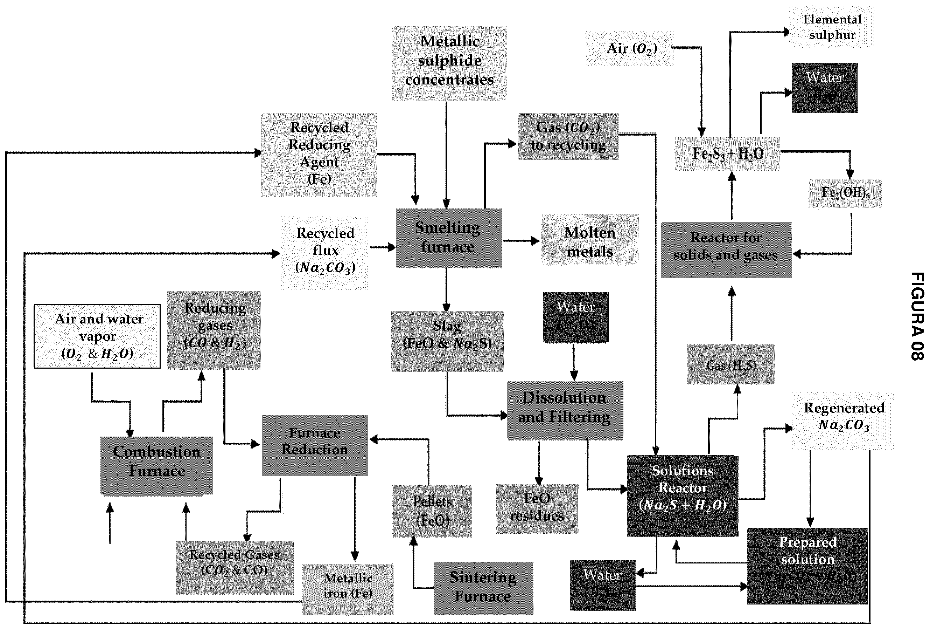

**Figure 1****: Metallurgical Extraction Process**
   - **1a** Ferrous and Non-ferrous Concentrated sulphurated minerals, with Gold inclusions where applicable.
   - **1b** Reducing agent (Fe)
   - **1c** Flux (Na₂CO₃)
   - **1d** Slag (FeO and Na₂S)
   - **1e** Molten Metals
   - **1f** Carbon Dioxide Gas to recycling CO₂
   - **1g** Smelting furnace
**Figure 2****: Dissolving and Filtering Slag Components**
   - **2a** Water (H₂O)
   - **2b** Slag (FeO and Na₂S)
   - **2c** Sintering (FeO)
   - **2d** Filtered Solution (Na₂S + H₂O)
   - **2e** Dissolving and Filtering
**Figure 3****: Regeneration of Sodium Carbonate for Recycling**
   - **3a** Hydrogen Sulphurated Gas or Hydrogen Sulphide (H₂S)
   - **3b** Filtered Solution (Na₂S + H₂O)
   - **3c** Recycled Carbon Dioxide Gas (CO₂)
   - **3d** Oversaturated Solution of Sodium Carbonate (Na₂CO₃ + H₂O)
   - **3e** Sodium Carbonate (Na₂CO₃) or regenerated Flux
   - **3f** Smelting Furnace for Concentrates
   - **3g** Water (H₂O)
   - **3h** Solutions Reactor (Na₂S + H₂O + Na₂CO₃): Oversaturated and Filtered Solutions
**Figure 4****: Removal of Hydrogen sulphide Gas and extraction of elemental Sulphur**
   - **4a** Water (H₂O)
   - **4b** Air (O₂)
   - **4c** Hydrogen Sulphurated Gas (H₂S)
   - **4d** Solid/Gas Reactor (Hydrated Iron Oxide Fe₂(OH)₆ and Sulphurated Hydrogen H₂S)
   - **4e** Regenerated Hydrated Iron Oxide (Fe₂(OH)₆)
   - **4f** Elemental Sulphur (S)
   - **4g** Ferric Sulphide with Water (Fe₂S₃ + H₂O)
**Figure 5****: Sintering:**
   - **5a** Ferrous Oxide (FeO) Residues
   - **5b** Ferrous Oxide (FeO) Pellets
   - **5c** Sintering Furnace
**Figure 6****: Generation of Reducing Gases**
   - **6a** Reducing Gases (CO + H₂)
   - **6b** Air oxygen and Water Vapor (O₂ and H₂O)
   - **6c** Coal (C) or Metallurgical Coke (Desulphurized C) or Natural Gas (CH₄)
   - **6d** Recycled gases (CO₂ and CO)
   - **6e** Combustion Furnace
**Figure 7****: Regeneration of Iron as Reducing Agent for Recycling**
   - **7a** Reducing Gases (CO + H₂)
   - **7b** Metallic iron (Fe)
   - **7c** Ferrous Oxide Pellets (FeO)
   - **7d** Reduction Furnace
**Figure 8****: Comprehensive Process for Extracting Ferrous and Non-Ferrous metals, and Gold as an inclusion where applicable, through the smelting of concentrated sulphurated minerals bearing them, with the regeneration and recycling of metallurgical inputs**
   - **8a** Metal-bearing concentrated sulphurated minerals, with Gold inclusions where applicable
   - **8b** Recycled Iron (Fe) as Reducing Agent
   - **8c** Recycled Sodium Carbonate (Na₂CO₃) as Flux
   - **8d** Ferrous Oxide and Sodium Sulphide (FeO + Na₂S) as Slags
   - **8e** Molten Metals
   - **8f** Carbon Dioxide Gas (CO₂) to recycle
   - **8g** Concentrates Smelting Furnace
   - **8h** Water (H₂O)
   - **8i** Dissolving and Filtering
   - **8j** Ferrous Oxide (FeO) Residues
   - **8k** Solutions Reactor (Na₂S + H₂O)
   - **8l** Water (H₂O)
   - **8m** Prepared Solution (Na₂CO₃ + H₂O)
   - **8n** Regenerated Sodium Carbonate (Na₂CO₃)
   - **8ñ** Hydrogen sulphide Gas (H₂S)
   - **8o** Sintering Furnace
   - **8p** Ferrous Oxide (FeO) Pellets
   - **8q** Metallic Iron or Direct-Reduced Iron (Fe)
   - **8r** Recycled Gases (CO₂ and CO)
   - **8s** Reduction Furnace
   - **8t** Combustion Furnace
   - **8u** Coal (C) or Metallurgical Coke (Desulphurized C) or Natural Gas (CH₄)
   - **8v** Air and water vapor (O₂ and H₂O)
   - **8w** Reducing Gases (CO and H₂)
   - **8x** Solid/Gas Reactor: Hydrated Iron Oxide (Fe₂(OH)₆) and Sulphurated Hydrogen (H₂S)
   - **8y** Ferric Sulphide + Water (Fe₂S₃+ H₂O)
   - **8z** Elemental sulphur (S)
   - **8aa** Hydrated Iron Oxide (Fe₂(OH)₆)
   - **8ab** Water (H₂O)
   - **8ac** Air (O₂)

### DETAILED DESCRIPTION OF DRAWINGS

The present invention includes a new technological process of seven stages, which are schematized in detail in the following diagrams.

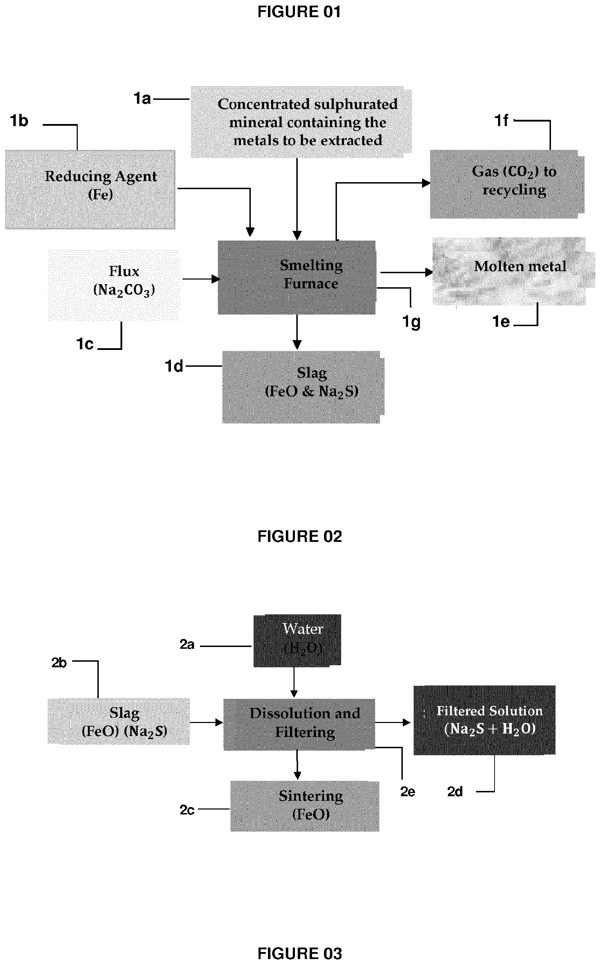

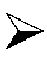 FIGURE N°1: It shows the metallurgical process diagram for the extraction of metals, such as, but not limited to, lead, silver, zinc, copper, molybdenum, antimony, arsenic, iron, gold included, where applicable, through smelting of non-ferrous and/or ferrous concentrated sulphurated minerals bearing them (1a). This process is carried out in a smelting furnace **(1g),** by adding 3 reactants: Non-Ferrous and/or Ferrous Mineral Concentrate, with gold as an inclusion, as the case may be **(1a),** Iron or Fe as reducing agent **(1b)** and Sodium Carbonate or Na₂CO₃ as flux **(1c)** to later obtain, as a result of the metallurgical process, the molten metal or metals formed by the metallic elements contained in the non-ferrous and/or ferrous mineral concentrates, including gold **(1e),** as the case may be, a slag made up of Ferrous Oxide or FeO, and Sodium Sulphide or Na₂S **(1d)** and gaseous effluent of Carbon Dioxide or CO₂ **(1f),** which will be captured and delivered to recycling.
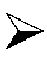 FIGURE N° 2: It shows a diagram of the dissolving process of a component of slag generated in the smelting furnace of concentrated sulphurated and/or non sulphurated minerals, mentioned in the previous stage, where the slag, formed by Ferrous Oxide or FeO and Sodium Sulphide or Na₂S **(2b),** with Water or H₂O **(2a),** are added to a Dissolving Reactor with subsequent filtering **(2e),** obtaining two products: a filtered solution of Sodium Sulphide or Na₂S and Water or H₂O **(2d),** and a solid residue of Ferrous Oxide or FeO that, previously agglomerated, will be sintered **(2c).**
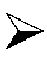 FIGURE N° 3: It shows a diagram of the regeneration process of sodium carbonate as flux. This process takes place in a Solutions Reactor **(3h)** where we add the filtered solution of sodium sulphide (Na₂S + H₂O) **(3b),** an oversaturated solution of sodium carbonate and water (Na₂CO₃ + H₂O) **(3d),** blowing the Carbon Dioxide gas or CO₂ recycled **(3c)** into this mix, to then obtain 3 products: Hydrogen sulphide Gas or H₂S **(3a)** that will be captured for its subsequent processing, Water or H₂O **(3g),** and regenerated Sodium Carbonate (Na₂CO₃) **(3e),** which will be recycled to the process, most of it will be used in the smelting furnace of concentrates **(3f),** and other small part will be used in the preparation of oversaturated sodium carbonate solution with water (Na₂CO₃ + H₂O) **(3d).**
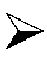 FIGURE N° 4: It shows a diagram of the process of Hydrogen sulphide Gas removal and Sulphur extraction. For this purpose, the Hydrogen sulphide Gas or H₂S **(4c)** is blown into a Solid/Gas Reactor **(4d)** containing crystals of Hydrated Iron Oxide or Fe₂(OH)₆ **(4e).** Both compounds react producing Ferric Sulphide or Fe₂S₃ with Water or H₂O **(4g).** Then, air containing Oxygen or O₂ **(4b)** is added to these products, producing a reaction that generates 3 products: Water or H₂O **(4a),** elemental Sulphur or S **(4f),** and hydrated Iron Oxide or Fe₂(OH)₆ **(4e),** which will be recycled to the same process.
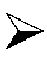 FIGURE N° 5: This diagram represents the Sintering process for solid residues of Ferrous Oxide or FeO **(5a)**, which were obtained from dissolving a slag component and its subsequent filtering. Prior to sintering, the above-mentioned solid residues are agglomerated **(5b)** and ready to be subjected to heating with controlled temperature in a Sintering Furnace **(5c),** where they are compacted and then harden with the subsequent cooling, forming the "Pellets", which are resistant to compression, required to regenerate Iron as reducing agent.
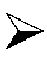 FIGURE N° 6: This diagram represents the Coal, Metallurgical Coke or Natural Gas Combustion process for the generation of reducing gases, Carbon Monoxide and Hydrogen, which are obtained in a Combustion Furnace **(6e)** by adding coal or metallurgical coke or natural gas **(6c),** air and water vapor (O₂ and H₂O) **(6b)** and Carbon Dioxide or CO₂ recycled gases (residual from the process of iron reduction) and Carbon Monoxide or CO (residual from the non-reacting reducing gas), water vapor or H₂O and Natural Gas or CH₄ if the latter was used **(6d),** to again obtain the reducing gases, Carbon Monoxide (CO) and Hydrogen (H2) **(6a)** from the Combustion Furnace.
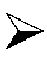 FIGURE N° 7: The diagram shows the reducing agent regeneration process through the reduction of the iron hosted in Ferrous Oxide. For this purpose, the reducing gases, Carbon Monoxide and Hydrogen, are used. In this process, the Pellets of Ferrous Oxide or FeO **(7c)** are fed into the Reduction Furnace **(7d)** and then the Reducing Gases, Carbon Monoxide or CO and Hydrogen or H₂ **(7a)** are injected, thus obtaining metallic Iron or Fe **(7b)** by reducing the Ferrous Oxide oxidation from +2 to zero. In this way, the regeneration of the reducing agent is achieved for its recycling to the concentrated sulphurated minerals smelting furnace, where non-ferrous metals are extracted, stating that, along with the gaseous effluent Carbon Dioxide or CO₂ **(7e),** a residual reducing gas Carbon Monoxide or CO, which did not react to the process, is also produced.
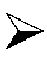 FIGURE N° 8: Finally, through the sequential integration of all the figures above, a new Metallurgical Process is established for the extraction of non-ferrous and ferrous metals from sulphurated minerals bearing them **(8a),** improving the state of the art, since this means that the application of the pyrometallurgical process of direct reduction is carried out with reduced operating costs and minimal environmental pollution, as a result of regeneration and recycling of Iron or Fe **(8b)** as reducing agent and Sodium Carbonate or Na₂Co₃ **(8c)** as flux.

### PREFERRED EXAMPLES (OR PREFERRED EMBODIMENT OF THE INVENTION)

Preferred examples of the real applicability of the Technological Innovation described in the previous points:

### 1. First Preferred Example: Extraction of Copper and Gold, or other metals such as Cobalt, Arsenic and Iron, as applicable, by Smelting concentrates of sulphurated minerals containing them, such as Chalcopyrite, Calcosine, Bornite, Enargite, Carrotite and Tenantite.

The extraction of Copper, Gold as an inclusion, and other metals from the sulphurated minerals that contain them (Chalcopyrite (CuFeS₂)), Chalcocite: Cu₂S, Bornite: Cu₅FeS₄, Enargite: Cu₃AsS₄, Carrotite: CuCo₂S₄ and Tenantite: Cu₁₂As₄S₁₃) to which they can be associated, is based on using appropriate amounts of both the reducing agent Iron (Fe), as well as the flux Sodium Carbonate (Na₂CO₃), and the products of the chemical reaction that occurs between the aforementioned reactants are the following: Metallic Copper (Cu) melted with Gold, if it was an inclusion, a slag constituted by Ferrous Oxide (FeO) and Sodium Sulphide (Na₂S), and gaseous emissions of Carbon Dioxide (CO₂).

In the case of the Chalcopyrite, the chemical formula established for this sulphurated mineral is used: CuFeS₂, from which the Copper (Cu) is extracted, specifying that the smelting of the concentrates of this sulphurated mineral together with Iron (Fe) as a reducing agent and Sodium Carbonate (Na2CO3) as a flux should be carried out considering the appropriate stoichiometric quantities, not only for the direct reduction of Copper (Cu), but also to control the composition of the slag to be produced, so that the regeneration and recycling of both the reducing agent Iron (Fe) and the flux of Sodium Carbonate (Na₂CO₃) is possible in the following sub-processes, which implies that the slag of the direct reduction process of Copper (Cu) should not be composed of three or more compounds, but only two, and it is necessary that one of them is soluble in Water, that is, it must be composed by the insoluble compound Ferrous Oxide (FeO) and by the highly soluble compound Sodium Sulphide (Na₂S), so that the products of the chemical reaction in the reactor are high density molten Copper (Cu), containing Gold if it was an inclusion, an alkaline and low density fluid slag, and the gaseous effluent Carbon Dioxide (CO₂), according to the following reaction:

CuFeS₂ + Au + Fe + 2Na₂CO₃ → Cu + Au + 2Na₂S + 2FeO + 2CO₂

It is specified that the amount of flux that must be added to the reactor should be appropriate so that Ferrous Sulphide (FeS) does not appear in the slag. According to chemical thermodynamics, the reaction begins to occur from 1100°C, and should preferably be completed at 1350°C.

Due to the reaction mechanisms involved in the process of direct reduction of Copper from the sulphur minerals that contain it (Chalcopyrite, Chalcocite, Bornite, Enargite, Carrotite and Tenantite), the number of gram-atoms of Iron (Fe), or its equivalent in weight, which will have to be considered as a reducing agent reactant in the aforementioned process, is directly related to the number of Sulphur (S) atoms contained in the sulphide copper mineral, and the gram-atoms of Iron, or its equivalent in weight, that are contained in the copper sulphurated minerals such as Chalcopyrite and Bornite must be reduced to the resulting amount, if applicable. On the other hand, the number of moles of Sodium Carbonate (Na₂CO₃), or its equivalent in weight, which must be considered as a reactant flux in the aforementioned process, is also directly related to the amount of Sulphur atoms existing in the chemical formula of Chalcopyrite or other copper-containing sulphurated minerals such as Chalcocite, Bornite, Enargite, Carrotite and Tenantite, according to the corresponding chemical reactions specified that follow:

Cu₂S + Fe + Na₂CO₃ → 2Cu + FeO + Na₂S + CO₂

Cu₅FeS₄ + 3Fe + 4Na₂CO₃ → 5Cu + 4FeO + 4Na₂S + 4CO₂

Cu₃AsS₄ + 4Fe + 4Na₂CO₃ → 3Cu +As + 4FeO + 4Na₂S + 4CO₂

CuCo₂S₄ + 4Fe + 4Na₂CO₃ → Cu + 2Co + 4FeO + 4Na₂S + 4CO₂

Cu₁₂As₄S₁₃ + 13Fe + 13Na₂CO₃ → 12Cu + 4As + 13FeO + 13Na₂S + 13CO₂

### 2. Second Preferred Example: Lead and Silver Extraction by smelting concentrated sulphurated minerals of Lead, such as Galena, and Silver, such as Acanthite, alone or associated:

In this process, the extraction of the lead metal from the Galena (PbS), or from the sulphurated mineral that contains it, is based on the appropriate use of both Iron (Fe) as a reducing agent as well as Sodium Carbonate (Na₂CO₃) as flux, and the products of the chemical reaction that occurs between the aforementioned reactants are the following: Cast metal lead, a slag formed by Ferrous Oxide (FeO) and Sodium Sulphide (Na₂S), and gaseous emissions of Carbon Dioxide (CO₂). In order to have an effective control during the formation of the slag, since it is critical step, the chemical formula established for the Galena or Lead Sulphide is used: PbS, a sulphurated mineral from which metal lead is to be extracted. It should be considered that the application of the improved direct reduction process involves the use of the reducing agent and the flux in the appropriate stoichiometric proportions, so that the regeneration and recycling of the referred metallurgical inputs are feasible in the following processes. For this purpose, it is indispensable for the slag, at the end, to be formed not by three or more compounds, but only by two, and one of them should be soluble in Water. In this regard, it should be pursued that the slag obtained from the metal lead extraction in smelting furnace only consists of the insoluble compound Ferrous Oxide (FeO) and the water-soluble compound Sodium Sulphide (Na₂S), which requires full control of the formation of Ferrous Sulphide (FeS) in the slag, and can be achieved if the main reaction of the direct reduction process using Iron (Fe) as a reducing agent and Sodium Carbonate (Na₂CO₃) as a flux is the following:

PbS + Fe + Na₂CO₃ → Pb + Na₂S + FeO + CO₂

According to chemical thermodynamics, the aforementioned reaction begins to occur at 950°C and should preferably be completed by 1400°C.

Likewise, while extracting Silver from the sulphurated minerals that contain it, such as, without limitation, Acanthite or Ag₂S (Argentite at temperatures greater than 177°C), proper use of both Iron (Fe) as a reducing agent and Sodium Carbonate (Na₂CO₃) as a flux should be applied, and the products of the chemical reaction between the aforementioned reactants are the following: cast metal silver, a slag formed by Ferrous Oxide (FeO) and Sodium Sulphide (Na₂S), and gaseous emissions of Carbon Dioxide (CO₂). Regarding the slag, the same criteria and technical foundations for its conformation are applied, so it is necessary for the chemical reaction occurring inside the furnace, where the sulphurated minerals concentrates are cast, to be the following:

Ag₂S + Fe + Na₂CO₃ → 2Ag + Na₂S + FeO + CO₂

According to chemical thermodynamics, the aforementioned reaction begins to occur at 775°C and should preferably be completed by 1425°C.

However, in general, Galena (PbS) is associated with various sulphide Silver minerals such as Acanthite (Ag₂S), so that the reactants must be handled in the smelting furnace in order to carry out the following chemical reaction:

PbS + Ag₂S + 2Fe + 2Na₂CO₃ → Pb + 2Ag + 2Na₂S + 2FeO + 2CO₂

It should be noted that Acanthite or Ag₂S contributes one more atom of Sulphur (S) to the reactants, which should be reflected in the amounts of the reducing agent Iron and the flux Sodium Carbonate that must be added. According to chemical thermodynamics, the aforementioned reaction begins at 950°C and should preferably be completed by 1150°C, although it was experimentally verified that the reaction occurs completely at 950°C.

In view of the above, it is concluded that, during the process of direct reduction of Lead from the sulphurated mineral containing it, the number of moles of Sodium Carbonate (Na₂CO₃), or its equivalent in weight, which should be considered as a reactant flux in the process, is directly related to the sulphur atoms existing in the chemical formula of Galena or Lead Sulphide (PbS), a mineralogical compound that contains the metal Lead to be extracted. Likewise, the number of gram-atoms of Iron (Fe), or its equivalent in weight, that will need to be considered as a reactive reducing agent in the process is directly related to the number of gram-moles of Ferrous Oxide (FeO) that will be obtained and, as it depends on the number of gram-moles of Oxygen (O₂) released as such in the chemical reaction, it is inferred that the required amount of gram-atoms of Iron (Fe) atoms will depend on the number of moles of Sodium Carbonate (Na₂CO₃) considered as a flux and also on the number of Sulphur atoms (S) contained in the Galena or Lead Sulphide (PbS).

### 3. Third Preferred Example: Zinc and Silver Extraction by smelting Concentrated sulphurated minerals of Zinc, such as Sphalerite, and Silver, such as Acanthite, alone or associated:

In this process, the extraction of Zinc metal from the Sphalerite (ZnS) or the sulphurated mineral that contains is done by applying the improved direct reduction process, which is based on the proper use of both Iron (Fe) as a reducing agent and Sodium Carbonate (Na₂CO₃) as a flux, and the products of the chemical reaction between the reactants are the following: metal gaseous Zinc (later liquefied by condensation), a light and fluid slag formed by Ferrous Oxide (FeO) and Sodium Sulphide (Na₂S), and gaseous emissions of Carbon Dioxide (CO₂). Given its importance, it is also necessary to have an effective control during the formation of the slag during the direct reduction process. To do this, once the smelting furnace is charged with the concentrated minerals of Sphalerite, the Iron (Fe) is added as a reducing agent and Sodium Carbonate (Na₂CO₃) as a flux, specifying that the use of these metallurgical inputs must be done in stoichiometric proportions, so that the regeneration and recycling of both the reducing agent and the flux is possible from the products obtained from the chemical reaction. This can be achieved if the slag is mainly formed not by three or more compounds, but only by two, and one of them should be soluble in Water. In this regard, it should be pursued that the slag obtained from the metal Zinc extraction in the smelting furnace consists only of the insoluble compound Ferrous Oxide (FeO) and the water-soluble compound Sodium Sulphide (Na₂S), which implies full control of the non-formation of Ferrous Sulphide (FeS) in the slag, for which it is necessary that the chemical reaction of the process complies with the following:

ZnS + Fe + Na₂CO₃ → Zn + Na₂S + FeO + CO₂

According to chemical thermodynamics, the reaction begins at 1000 °C and is preferably completed at 1850 °C.
In this sense, if Sphalerite (ZnS) is associated with sulphurated Silver minerals such as Acanthite (Ag₂S), then, the chemical reaction that will occur in the smelting furnace is the following:

ZnS + Ag₂S + 2Fe + 2Na₂CO₃ → Zn + 2Ag + 2Na₂S + 2FeO + 2CO₂

It should be noted that Silver, when presented in association with the zinc sulphides in the form of Acanthite or Ag₂S, contributes one more Sulphur (S) atom to the reactants, which will affect the quantities required from the reducing agent Iron and the flux Sodium Carbonate. According to chemical thermodynamics, the reaction begins at 950°C and should preferably be completed at 1150°C.

In view of the above, it is concluded that, during the process of direct reduction of Zinc from the sulphurated mineral containing it, the number of moles of Sodium Carbonate (Na₂CO₃), or its equivalent in weight, which should be considered as a reactant flux during the process, is directly related to the existing sulphur atoms in the chemical formula of Sphalerite (ZnS), a mineralogical compound containing the zinc metal to be extracted. Likewise, the number of gram-atoms of Iron (Fe), or its equivalent in weight, which must be considered as a reactive reducing agent in the process, is directly related to the number of gram-moles of Ferrous Oxide (FeO) obtained as a product and, as it depends on the number of gram-moles of Oxygen (O₂) released as such in the chemical reaction, it is inferred that the required gram-atoms of Iron (Fe) will depend on the number of moles of Sodium Carbonate (Na₂CO₃) considered as a flux and also on the number of Sulphur atoms (S) contained in the Sphalerite (ZnS).

### 4. Fourth Preferred Example: Extraction of Gold, Silver and Iron by smelting concentrated gold-iron sulphurated minerals such as, but not limited to, Pyrite, Pyrrhotite and Marcasite.

In this process, the extraction of Gold (Au), Silver (Ag) and Iron (Fe) contained in the sulphurated minerals of the latter, such as Pyrite (FeS₂), Pyrrhotite (FeS), Marcasite (FeS₂), is carried out by applying the improved direct reduction, using the Sodium Carbonate flux in an appropriate way and the Iron in a complementary way as a facilitator of the atomic exchange, which depends on the mineralogical species. In the case of mono-sulphurated iron minerals (pyrrhotite), the iron content in these is sufficient to cause the chemical reactions between the reactants that allow the extraction of Gold and Silver. In the case of the bi-sulphurated iron minerals, given that there is twice the sulphur atoms in the reactants, it will always be necessary to add the stoichiometrically necessary amount of iron as a reactant so that it acts efficiently as a facilitator of the atomic exchange in the chemical reaction. However, for an effective extraction of this precious metals, Gold and Silver, it is necessary to introduce not only the iron sulphurated concentrates in the smelting furnace together with the additional Sodium Carbonate and Iron flux if necessary, but also metal Lead, so that it together with the precious metals Gold and Silver form a high density cast metal product that can be sieved and that, in turn, is easily separable from the other product called slag, which will be of low density and low viscosity because it will be mainly composed of Ferrous Oxide (FeO) and Sodium Sulphide (Na₂S), which gives gaseous emissions of Carbon Dioxide (CO₂) as a third product.

Also, it is important to specify that the metal Lead, the same one that is added to the smelting furnace together with the reactants, is obtained as a cast metal product carrying the metals Gold and Silver, which are also cast. On the other hand, in order to have an effective control during the formation the slag, it is necessary that the iron sulphide concentrate smelting, as in the case of the gold pyrites, which is introduced in the furnace together with the additional Iron (Fe) required and the indispensable Sodium Carbonate (Na₂CO₃) as a flux, is made considering the appropriate stoichiometric amounts of these metallurgical inputs, not only to obtain the maximum recoveries of Gold and Silver, but also to meet the need to have a controlled composition of the slag to be produced, so that the regeneration and recycling of both the reducing agent Iron (Fe) and the flux of Sodium Carbonate (Na₂CO₃) is possible in the subsequent processes. This implies that care must be taken so that the slag from the Gold extraction process (Au) is formed not by three or more compounds, but only by two, and one of them should be soluble in Water, so that the three products of the chemical reaction happening in the smelting furnace are, first of all, the high-density cast metal product consisting of Gold, Silver and Lead, secondly, a low density fluid slag formed by Ferrous Oxide and Sodium Sulphide (FeO and Na₂S) and, finally, the gaseous effluent Carbon Dioxide (CO₂), according to the following reaction:

Au + Ag₂S + Pb + FeS₂ + 2Fe+ 3Na₂CO₃ → Au + 2Ag + Pb + 3Na₂S + 3FeO + 3CO₂

According to chemical thermodynamics and considering the energy costs involved, the temperature range in which the reaction preferentially occurs is between 775°C - 950°C. The above chemical reaction is merely an example, since it is known that the mineralogical species contained in Silver appear in much lower quantities (Ounces/Ton) than the percentage amounts contained in Pyrite.

It should be noted that Silver is associated with iron sulphides in the form of Acanthite Ag₂S (Argentite above 177°C) and, therefore, contributes one more atom of Sulphur (S) to the reactants, which will affect the quantities required of the reducing agent Iron and the flux Sodium Carbonate. Likewise, the amount of flux that must be added to the reactor must be correct so that Ferrous Sulphide does not form in the slag (FeS).

In view of the above, it can be inferred that, in case no silver sulphurated mineral is associated with Pyrite (FeS₂), and if the latter is only gold pyrite, then the following chemical reaction will take place in the smelting furnace:

Au + Pb + FeS₂ + Fe+ 2Na₂CO₃ → Au + Pb + 2Na₂S + 2FeO + 2CO₂

In accordance with chemical thermodynamics and considering the energy costs, the temperature range in which the reaction preferentially occurs is between 750°C - 950°C, and it should be specified that the gold extraction process from gold pyrite or Iron disulphide (FeS₂) is characterized by, on the one hand, the number of gram-atoms of iron (Fe), or its equivalent in weight, which will need to be considered as a reactive reducing agent in the process, is directly related to the number of atoms of Sulphur (S) contained in the Pyrite or Iron disulphide (FeS₂), exceptionally the gram-atoms of Iron or its equivalent in weight that are contained in the gold pyrite must be deducted in this calculation. And, on the other hand, the number of moles of Sodium Carbonate (Na₂CO₃), or its equivalent in weight, that should be considered as a reactant flux in the Gold extraction process is also directly related to the amount of existing Sulphur atoms in the chemical formula of Pyrite or Iron Disulphide (FeS₂).

It should be noted that, by means of complementary metallurgical processes such as the dissolution of part of the slag (of the soluble Sodium Sulphide or Na₂S), the filtering of the solid waste (FeO), the agglomeration and sintering of the Ferrous Oxide (FeO) pellets and the reduction of Iron from the FeO pellets using reducing gases (Carbon Monoxide and Hydrogen), the metal iron is finally obtained.

### 5. Fifth Preferred Example: Extraction of Antimony and Silver by Smelting Stibnite, Stefanite and Tetrahedrite minerals concentrates.

In this process, the extraction of the Antimony metal from the sulphurated mineral that contains it is done by applying the direct reduction improved with regeneration and recycling of the metallurgical inputs involved, which is based on the proper use of both Iron (Fe) as a reducing agent and Sodium Carbonate (Na₂CO₃) as a flux, and the products of the chemical reaction between the reagents are the following: metal Antimony, a slag formed mainly by the insoluble compound Ferrous Oxide (FeO) and by the water-soluble compound Sodium Sulphide (Na₂S), and, gaseous emissions formed mainly by Carbon Dioxide (CO₂). In order to effectively control the formation of the slag, the concentrated minerals Stibnite or Antimony Trisulphide (Sb₂S₃), which is a sulphurated mineral extracted from metal Antimony, should be inside the smelting furnace. Then, the reducing agent Iron (Fe) and the flux Sodium Carbonate (Na₂CO₃) are added to the reactor in stoichiometric proportions that allow the regeneration and recycling of the mentioned metallurgical inputs in the subsequent processes; for such purpose, the formation of the slag should be controlled, taking care that the latter is constituted not by three or more compounds, but only by two, and one of them should be soluble in Water. In this regard, it should be pursued that the slag obtained from the smelting furnace during the metallic antimony extraction is only composed of Ferrous Oxide (FeO) and Sodium Sulphide (Na₂S), which implies that the formation of Ferrous Sulphide (FeS) in the slag must be controlled, for which it is necessary for the reaction of the direct reduction process using Iron (Fe) as a reducing agent and Sodium Carbonate (Na₂CO₃) as a flux to be the following:

Sb₂S₃ + 3Fe + 3Na₂CO₃ → 2Sb + 3Na₂S + 3FeO + 3CO₂

In this case, chemical thermodynamics state that the reaction begins at 300°C and should preferably be completed at 625°C.

In view of the above, it is concluded that, in the direct reduction process of Antimony from the sulphurated mineral that contains it, the number of moles of Sodium Carbonate (Na2CO3), or its equivalent in weight, which must be considered as a reactant flux in the process, is directly related to the sulphur atoms existing in the chemical formula of Stibnite or Antimony Trisulphide (Sb₂S₃), a mineralogical compound containing the metal Antimony to be extracted. Likewise, the number of gram-atoms of iron (Fe), or its equivalent in weight, which will need to be considered as a reactive reducing agent in the process, is directly related to the number of gram-moles of Ferrous Oxide (FeO) to be obtained as product and, since it depends on the number of gram-moles of Oxygen (O₂) released as such in the chemical reaction, it is concluded that the required gram-atoms of Iron (Fe) atoms will depend on the number of moles of Sodium Carbonate (Na₂CO₃) considered as a flux and also on the number of Sulphur atoms (S) contained in the concentrated mineral of Stibnite or Antimony Trisulphide (Sb₂S₃).

Regarding the extraction of Silver and Antimony from Stefanite (Ag₅SbS₄), the established procedure for non-ferrous sulphurated minerals from two polyatomic metals is applied:

Ag₅SbS₄ + 4Fe + 4Na₂CO₃ → 5Ag + Sb + 4Na₂S + 4FeO + 4CO₂

Regarding the extraction of Antimony and Silver from the argentiferous Tetrahedrite (Ag₃SbS₃ + x(Fe, Zn)₆Sb₂S₉), considering for this case that x = 1 and that silver has replaced copper in the sulphosalt, the established procedure for combinations of ferrous and non-ferrous bimetallic sulphurated minerals:

[Ag₃SbS₃ + (Fe, Zn)₆Sb₂S₉] + 6Fe + 12Na₂CO₃ → → 3Ag + 3Sb + + 6Zn + 12Na₂S + 12FeO + 12CO₂

### 6. Sixth Preferred Example: Extraction of Molybdenum by Smelting Mineral Molybdenite Concentrates.

In this process, the extraction of molybdenum metal from the sulphurated mineral that contains it (Molybdenite or MoS₂) is carried out by applying the improved direct reduction process, which is based on the appropriate use of both iron (Fe) as a reducing agent and Sodium Carbonate (Na₂CO₃) as a flux, and the products of the chemical reaction between the reactants are the following: Powdered metallic molybdenum due to its high smelting point, a light and fluid slag formed by Ferrous Oxide (FeO) and Sodium Sulphide (Na₂S), and gaseous emissions of Carbon Dioxide (CO₂). Given its importance, during the aforementioned process of improved direct reduction, it is also necessary that there is an effective control of the formation of the slag. For this purpose, once the concentrated minerals of Molybdenite are inside the smelting furnace, Iron (Fe) as a reducing agent and Sodium Carbonate (Na₂CO₃) as a flux are added, stating that the use of these metallurgical inputs must be done in proper stoichiometric proportions, so that the regeneration and recycling of both the reducing agent and the flux is possible from the products obtained from the chemical reaction. This can be achieved if the slag is mainly formed not by three or more compounds, but only by two, and one of them should be soluble in Water. In this sense, it should be pursued that the slag obtained from the molybdenum metal extraction in the smelting furnace is only composed of the insoluble compound Ferrous Oxide (FeO) and the water-soluble compound Sodium Sulphide (Na₂S), which implies that the non-formation of Ferrous Sulphide (FeS) in the slag must be controlled at the same time, for which the following chemical reaction is necessary in the main process:

MoS₂ + 2Fe + 2Na₂CO₃ → Mo + 2Na₂S + 2FeO + 2CO₂

In accordance with chemical thermodynamics, considering the energy costs involved, the reaction begins at 1175°C and should preferably be completed at 1375°C.

From the above, it is concluded that, during the process of direct reduction of molybdenum from the sulphurated mineral that contains it, the number of moles of Sodium Carbonate (Na₂CO₃), or its equivalent in weight, which must be considered as a reactant flux, is directly related to the sulphur atoms in the chemical formula of molybdenite or molybdenum disulphide (MoS₂). Likewise, the number of gram-atoms of Iron (Fe), or its equivalent in weight, which will need to be considered as a reactive reducing agent in the process, is directly related to the number of gram-moles of Ferrous Oxide (FeO) that will be obtained as a product and, since it depends on the number of gram-moles of Oxygen (O₂) released as such in the chemical reaction, it is inferred that the required gram-atoms of Iron (Fe) will depend on the number of moles of Sodium Carbonate (Na₂CO₃) considered as flux, and also on the number of Sulphur atoms (S) contained in the concentrated mineral Molybdenite or Molybdenite Bisulphide (MoS₂).

### 7. Seventh Preferred Example: Extraction of Arsenic with Gold and/or Arsenic with Silver by Smelting Arsenopyrite Auriferous and/or Proustite Concentrates, respectively.

During the extraction process of the Arsenic (As) and Gold (Au) metals contained in the Gold Arsenopyrite (AsFeS with Au), we have the following chemical reaction:

AsFeS + Au + Na₂CO₃ → As + Au + Na₂S + FeO + CO₂

According to chemical thermodynamics, the previous reaction begins at 825°C, and the reaction must be completed preferably at 1325°C, considering reasonable energy costs.

When Gold Arsenopyrite is associated with Pyrite (FeS₂), the above chemical reaction must be restated as follows:

AsFeS + Au + FeS₂ + Fe + 3Na₂CO₃ → As + Au + 3Na₂S + 3FeO + 3CO₂

According to chemical thermodynamics and considering the energy costs, the previous reaction begins at 770°C, and the reaction must be completed preferably at 900°C.

Given that in certain cases the Gold Arsenopyrite is not only associated with Pyrite (FeS₂) but also with Chalcopyrite (CuFeS₂), the corresponding chemical reaction is the following:

AsFeS + Au + FeS₂ + CuFeS₂ + 2Fe + 5Na₂CO₃ → → As + Au + Cu + 5Na₂S + 5FeO + 5CO₂

According to chemical thermodynamics, the above reaction begins at 875°C, and it must be completed preferably at 975°C considering reasonable energy costs. It must have been verified that it is possible to extract all the Arsenic contained in the aforementioned gold Arsenopyrite concentrate at the most appropriate stoichiometric conditions and at a temperature of 1000°C.

Regarding the recovery of Gold, due to the relatively low boiling point of the metal Arsenic, it is essential to consider the use of the metal Lead as an additional reactant in the previous reactions, so that it can be at the end the carrier of the Gold in the products of the reaction, not only because of the affinity that exists between the two metals, but also because, together with Lead and Gold, they form a cast metal product of high specific weight, which is easily separated from the slag constituted by sodium sulphide and ferrous oxide in order to obtain a proper casting.

Likewise, as in the previous preferred examples, in order to effectively control the formation of the slag, the chemical formulas established for Arsenopyrite (AsFeS), Pyrite (FeS₂) and Chalcopyrite (CuFeS₂) are used, specifying that the smelting of the concentrates of these ferrous sulphurated minerals together with the reducing agent Iron (Fe) and with the flux Carbonate of Sodium (Na₂CO₃) should be carried out considering the appropriate stoichiometric amounts of the latter, not only so as to obtain a high recovery of Arsenic (As), Gold (Au) and Copper (Cu), as applicable, but also to be able to reduce and recycle the reducing agent Iron (Fe) and the flux Sodium Carbonate (Na₂CO₃) the subsequent processes, which implies that the slag from the extraction process of Arsenic (As) and Gold (Au) and/or Copper (Cu) should not be composed by three or more compounds, but only by two, by Ferrous Oxide (FeO) and water-soluble Sodium Sulphide (Na₂S), avoiding Ferrous Sulphide (FeS) as a component of the slag at all times. The third product of the above chemical reactions is the gaseous effluents of Carbon Dioxide in the corresponding stoichiometric amounts.

For the extraction process of the metals Arsenic (As) and Silver (Ag) contained in Proustite (AgAsS₃), the general referential chemical reaction established for the non-ferrous sulphurated minerals of two polyatomic metals is applied and, in this sense, the referred process has the following chemical reaction:

Ag₃AsS₃ + 3Fe + 3Na₂CO₃ → 3Ag + As + 3Na₂S + 3FeO + 3CO₂

the technical criteria discussed above prevail for all purposes.

### 8. Eighth Preferred Example: Iron Extraction by Smelting the Concentrates of Iron Sulphurated minerals such as Pyrrhotite, Pyrite and Marcasite.

During this extraction process of Iron (Fe) contained in sulphurated minerals such as, without limitation, Pyrrhotite (FeS), Pyrite and Marcasite (both FeS₂), we use in an appropriate way both Iron (Fe) as facilitator of the atomic exchange, if the stoichiometric balance of the chemical reaction requires it, as well as Sodium Carbonate (Na₂CO₃) as a flux, so that a slag that can be cast is obtained as a product of the process, which must have low density and low viscosity because it will be formed by Ferrous Oxide (FeO) and Sodium Sulphide (Na₂S), giving also the respective gaseous emissions formed by Carbon Dioxide (CO₂) as a second product. Likewise, in order to effectively control the formation of the slag, the chemical formulas established for iron sulphurated minerals are used, such as Fe₂S in the case of Pyrites, specifying that the smelting of one gram-mole of Pyrite with a gram-atom of Iron (Fe) and one gram of the Sodium Carbonate (Na₂CO₃) flux must be made considering the appropriate stoichiometric quantities in order to fully control the composition of the slag to be produced, so that the reduction and recycling of both the sodium carbonate (Na₂CO₃) and the iron (Fe) flux that should be added, in the case of having iron disulphides as reactant, is possible in the subsequent processes. This implies that care must be taken so that the slag from the Iron (Fe) extraction process is formed mainly not by three or more compounds, but only by two, one of them should be soluble in Water (Sodium Sulphide), but not the other one (Ferrous Oxide), and also the formation of Ferrous Sulphide (FeS) in the slag should be avoided with the following reaction:

FeS₂ + Fe+ 2Na₂CO₃ → FeO + 2Na₂S + 2CO₂

According to chemical thermodynamics, the above reaction occurs at 750°C, and should preferably be completed at 950°C, considering reasonable energy costs.

The control over the composition of the slag allows to take advantage of the high solubility of Sodium Sulphide (Na₂S) in Water (H₂O) and, for the purposes of having the Ferrous Oxide (FeO) compound as the only solid residue, it is indispensable that the slag, which is obtained in the smelting furnace for iron sulphide concentrates, is mixed in the Solution reactor with the amount of liquid water necessary, considering the solubility of Sodium Sulphide (Na₂S), so that the following electrochemical dissociation reaction occurs:

Na₂S + H₂O ⇄ 2Na⁺ + HS⁻ + OH⁻

Then, the resulting solution is filtered, and only solid waste formed by Ferrous Oxide (FeO) is separated. Next, the agglomeration and subsequent sintering of the solid waste is carried out in the respective furnace, at a controlled temperature, so that the agglomerated Ferrous Oxide (FeO) products, appropriately sintered and converted into "pellets", acquire the mechanical property of compressive resistance required inside the Iron Reduction Furnace, where the FeO "pellets" will be finally sent. In order to achieve the reduction of the iron contained in Ferrous Oxide "pellets", it is necessary to have coal, metallurgical coke or natural gas fuel available in the combustion furnace, where the reducing gases (carbon monoxide and hydrogen) will be generated, and insufflate them both with air and/or water vapor required as the case may be, such as the gaseous effluents Carbon Dioxide (residual CO₂) and Carbon Monoxide (remaining CO) recycled from the Iron Reduction Furnace, which result in the following chemical reactions at a temperature between 900°C and 1000°C, as applicable:

C + O₂ → CO₂

C + CO₂ → 2CO

C + H₂O → CO + H₂

C + 2H₂O → CO₂ + 2H₂

CO + H₂O → CO₂ + H₂

CH₄ + H₂O → 3H₂ + CO

The sintered "pellets" are introduced and accumulated in the Iron Reduction Furnace in order to be subjected, for the necessary period, to the appropriate flow of the Carbon Monoxide (CO) and Hydrogen (H₂) reducing gases from the combustion furnace, which causes the oxidation state +2 of Iron to be reduced to zero, thus making possible the extraction of metal iron (Fe) using the following chemical reactions:

FeO + CO → Fe + CO₂

FeO + H₂ → Fe + H₂O

From the above, it is concluded that, in a process of Iron extraction from Pyrite and Marcasite (both Iron Bisulphides: FeS₂), Pyrrhotite (Iron Sulphide: FeS) or other Iron Sulphides, the number of gram-atoms of iron (Fe), or its equivalent in weight, which will have to be considered as a reactant in the process, is directly related to the number of atoms of sulphur (S) contained in Pyrite and/or Marcasite (FeS₂), with the exception that the gram-atoms of Iron, or its equivalent in weight, that are contained in the Pyrite and/or Marcasite to be cast must be deducted in this calculation. And, on the other hand, the number of moles of Sodium Carbonate (Na₂CO₃), or its equivalent in weight, which must be considered as a reactant flux in the Iron extraction process, is also directly related to the amount of Sulphur atoms existing in the chemical formula of Pyrite and/or Marcasite (Iron Bisulphides: FeS₂). It is specified that, in the case that the cast of one mole gram of Pirotite (FeS) is desired, only one mole gram of sodium carbonate will be required as a flux. It is necessary to consider the previous indications so as to have control over the composition of the slag, which must be composed of Ferrous Oxide (FeO) and Sodium Sulphide (Na₂S). Gaseous emissions of Carbon Dioxide (CO₂) will be obtained as an additional product in these cases. As previously mentioned, an adequate control over the composition of the slag makes it possible to take advantage of the high solubility of Sodium Sulphide in Water, which, in turn, makes it possible to obtain Ferrous Oxide (FeO) as the only solid residue after the corresponding filtering, which will then be agglomerated and sintered to obtain "pellets" of Ferrous Oxide. The metal Iron, which was to be extracted from the Iron sulphurated minerals, is obtained from this pellets.

### References:

(1) Aranguren F. & Mallol A. (1963).Siderurgia, Madrid, Editorial Dossat.
(2) Aranguren F. & Mallol A. (1963).
(3) Aranguren F. & Mallol A. (1963).
(4) Bray J. (1968). Metalurgia Extractiva de los Metales o Férreos, Madrid. Ediciones Interciencia.
(5) Aranguren F. & Mallol A. (1963).
(6) Zambrano C. (1988). Apoyo a la puesta en marcha de la Planta de Carbonato de Sodio en solución de Química del Pacífico S.A. Informe de Prácticas. Facultad de Química e Ingeniería Química de la Universidad Nacional Mayor de San Marcos.
(7) Choppin G. & Jaffe B. (1970).
(8) Costa A. (1955). Breve estudio sobre la posibilidad de instalar una Planta de Carbonato de Sodio en el Perú. Tesis de Grado para optar el título de Ingeniero Químico por la Universidad Nacional Mayor de San Marcos, Lima.
(9) Fung C. & Luján R. (1978). Proyecto para la Instalación de una Planta de Carbonato de Sodio en Química del Pacífico S.A. Informe de Prácticas en la Escuela Académico Profesional de Ingeniería Química. Facultad de Química e Ingeniería Química. Universidad Nacional Mayor de San Marcos, Lima.
(10) Zambrano C. (1988).

## Claims

1. A process for the continuous extraction of metals from sulphurated minerals containing them, with or without associated iron, **characterized by** the direct reduction of the specific metal or metals to be extracted, with regeneration and recycling of iron as reducing agent, and sodium carbonate as flux, from slag and liquid and gaseous effluents derived from processes involved, in which said process includes the following steps:
- **Extraction of metals in the smelting furnace** that smelts ferrous and/or non-ferrous concentrated sulphurated minerals containing the metal to be extracted, including, but not limited to, lead, silver, zinc, copper, molybdenum, antimony, arsenic, with or without iron associated and, with gold and silver inclusion in certain cases, using iron as a reducing agent of said non-ferrous metals and sodium carbonate as a flux; resulting in molten or powdery metals extracted, a controlled smooth slag consisting of ferrous oxide and sodium sulphide, and gaseous emissions of carbon dioxide.
- **Selective dissolution in water of sodium sulphide from slag and filtering of waste** in order to obtain two intermediate products, the solid ferrous oxide and a filtered sodium sulphide solution.
- **Regeneration of sodium carbonate in solution reactor for recycling,** by mixing the filtered sodium sulphide solution with an over-saturated sodium carbonate solution. The gaseous effluent carbon dioxide is captured and recycled from the non-ferrous metal extraction process by direct reduction, and blown to the above mixture, which results in regenerated sodium carbonate, and hydrogen sulphide gas and water, as intermediate products.
- **Removing hydrogen sulphide gas and obtaining sulphur,** by capturing and conducting the gaseous effluent to a solid/gas reactor, so that it reacts with the hydrated iron oxide to obtain ferric sulphide and water. With proper ventilation, these products are converted into elemental sulphur and water, and regenerated hydrated iron oxide for recycling.
- **Ferrous oxide sintering,** by previous agglomeration and subsequent heating of solid waste, obtained by filtration, at a controlled temperature between 1100 and 1300 °C, then some slag is dissolved to obtain ferrous oxide pellets with compression strength, a physical property required in the next stage of regeneration of the reducing agent, iron.
- **Generation of reducing gases, carbon monoxide and hydrogen, obtained in a combustion furnace,** by using coal, metallurgical coke or natural gas as fuel. The necessary air and water vapor are blown to said furnace where the process is carried out. Recycled gases such as residual carbon dioxide and remaining carbon monoxide are also blown. These gases are taken from the reducing furnace in which the reducing agent, iron, is regenerated.
- **Regeneration of iron as reducing agent for recycling** by reducing said metal contained in ferrous oxide. This residue was derived from the dissolution of slag that has been agglomerated and sintered for a proper reaction with the reducing gases, carbon monoxide and hydrogen, generated in the combustion furnace. Metal iron was then obtained and recycled in the smelting furnace of concentrated sulphurated mineral concentrates.

2. A method for extracting base and precious metals from ferrous and/or non-ferrous sulphurated minerals containing them, **characterized by** smelting metal or metals to be extracted in concentrate form, including, but not limited to, lead, silver, zinc, copper, molybdenum, antimony, arsenic, including gold and/or silver if they occur as inclusions in pyrite, arsenopyrite, chalcopyrite, using iron as a reducing agent and sodium carbonate as flux, resulting in metal or metals extracted, molten or in powdery solid state, a controlled, smooth slag consisting of ferrous oxide and sodium sulphide, and gaseous emissions of carbon dioxide.

3. A process for obtaining metallic iron from the processing of slag consisting of ferrous oxide and sodium sulphide, **characterized by**:
- Dissolving sodium sulphide, a slag compound, in water.
- Filtering ferrous oxide from solid waste.
- Agglomerating and sintering ferrous oxide for pellet formation of this compound.
- Generating reducing gases, carbon monoxide and/or hydrogen, obtained in a combustion furnace, by using coal, metallurgical coke or natural gas, together with oxygen, water vapor and/or carbon dioxide. Optionally, this particular step may be dispensed with, provided that the reducing gases, carbon monoxide and/or hydrogen, instead of being generated, are acquired.
- Reducing iron contained in ferrous oxide pellets using carbon monoxide and/or hydrogen gases as reducing agents.

4. A process for obtaining sodium carbonate from carbon dioxide gas and smelting slag consisting of ferrous oxide and sodium sulphide, **characterized by**:
- Dissolving sodium sulphide, a slag compound, in water.
- Filtering and separating the solution resulting from the dissolution of sodium sulphide in water.
- Processing the filtered sodium sulphide solution with carbon dioxide gas and an over-saturated sodium carbonate solution.
- Filtering and heating the resulting sodium bicarbonate crystals for conversion into sodium carbonate crystals.
- Removing sulphurated hydrogen gas, generated in the processing of the filtered sodium sulphide solution, in order to make it react in a solid/gas reactor with hydrated iron oxide crystals.
- Obtaining ferric sulphide crystals and water in the solid/gas reactor.
- Ventilating ferric sulphide crystals and water in order to regenerate hydrated iron oxide for recycling and, at the same time, to produce elemental sulphur and water.

5. A method according to claim 2, for extracting gold and silver, occurring as inclusions in iron sulphurated minerals, and/or silver contained in their sulphides, **characterized by** smelting mineral concentrates, including, but not limited to, arsenopyrite, pyrite, marcasite, pyrrotite, chalcopyrite, argentite or acantite, using sodium carbonate as a flux, iron as a reducing agent where applicable and, as an additional aggregate, together with reactants, metallic lead, gold and silver carrier in the final product obtained from the extraction of the above precious metals.

6. A method for extracting metallic iron from concentrated sulphurated minerals of iron, including, but not limited to, pyrrotite and arsenopyrite monosulphides, marcasite and pyrite bisulphides, **characterized by** smelting these concentrates using sodium carbonate as a flux, and additional iron as a reducing agent where applicable, resulting in the extraction of metallic iron from the slag generated, which consists of ferrous oxide and sodium sulphide. Said metallurgical inputs are regenerated and recycled by taking the following steps:
- Smelting iron concentrated sulphurated minerals, using sodium carbonate as a flux and additional iron as a reducer or reactant where applicable.
- Dissolving sodium sulphide, a slag compound, in water.
- Filtering ferrous oxide from solid waste.
- Agglomerating and sintering ferrous oxide for pellet formation of this compound.
- Generating reducing gases, carbon monoxide and hydrogen, obtained in a combustion furnace, by using coal, metallurgical coke or natural gas, together with oxygen, water vapor and/or carbon dioxide. This step may be dispensed with if the reducing gases, carbon monoxide and/or hydrogen, are acquired.
- Reducing iron contained in ferrous oxide pellets using carbon monoxide and/or hydrogen gases as reducing agents.

7. A process for determining, in a process of direct reduction of metals from ferrous and non-ferrous concentrated sulphurated minerals containing them, the necessary quantities of iron as a reducing agent and sodium carbonate as a flux, for non-ferrous sulphurated minerals of a single metal, **characterized by**:
- Establishing the number of iron gram atoms, or their equivalent in weight, required as a reducing agent, or facilitator of the atomic exchange among reactants, in the referred process of direct reduction of metals, by determining the number resulting from adding all sulphur atoms contained in the chemical formula of mineralogical compounds containing the metal or metals to be extracted. The number of iron gram atoms, or their equivalent in weight, that are considered an atomic compound in the referred mineralogical compounds, is deducted from it.
- Establishing the number of moles of sodium carbonate, or their equivalent in weight, required as a flux in the referred process of direct reduction of metals, by determining the number resulting from adding all sulphur atoms contained in the chemical formula of mineralogical compounds containing the metal or metals to be extracted.
- Establishing that the number of moles of ferrous oxide, or their equivalent in weight, obtained as a product in the process slag, is equal to the total number of iron atoms required as a reducing agent among the process reactants.
- Establishing that the number of moles of sodium sulphide and carbon dioxide, or their equivalent in weight, obtained as products in both the process slag and gaseous effluents, is equal to the total number of moles of sodium carbonate required as a flux among the process reactants.
- The above applies to cases in which concentrated sulphurated minerals containing the metal or metals to be extracted, as applicable, are smelted in the smelting furnace considered for the process. In these cases, iron is used as a reducing agent and sodium carbonate as a flux, resulting in molten or powdery metals, depending on the physical properties of said metals and where applicable, a slag of controlled composition consisting of ferrous oxide and sodium sulphide, and gaseous emissions of carbon dioxide. In order to have effective control over the slag composition, which is indispensable to enable regeneration and recycling of the reducing agent and flux, the following general reactions are established for the following cases, considering the following general definitions:
• **Fe** is a reactant element of zero oxidation state, which acts as a reducing agent or as a facilitator of the atomic exchange between sulphur and sodium, as the case may be, when added to the main reactor.
• **Na₂CO₃** is a chemical reactant compound called sodium carbonate, which is added to the main reactor as a flux.
• **Na₂S** is one of the slag compounds called sodium sulphide obtained as a product of the general chemical reaction and is highly soluble in water.
• **FeO** is the other slag compound called ferrous oxide, obtained as a product of the general chemical reaction and is insoluble in water.
• **CO₂** is the gaseous effluent called carbon dioxide, obtained as a product of the general chemical reaction.
For non-ferrous sulphurated minerals of a single metal:
MₓS_{y} + yFe + yNa₂CO₃ → xM + yNa₂S + yFeO + yCO₂
Where:
- **M** is the non-ferrous metal to be extracted including, but not limited to, lead, silver, zinc, copper, molybdenum, antimony.
- **MₓS_{y}** is the chemical formula established for the sulphurated mineral from which metal M is to be extracted.
- **x** and **y** indicate the number of atoms of sulphur and metal M to be extracted, respectively, from MxSy, the stoichiometric coefficients of the remaining reactants and those of the products obtained in the process, depend on its values.

8. A process for determining, in a process of direct reduction of metals from ferrous and non-ferrous concentrated sulphurated minerals containing them, the necessary quantities of iron as a reducing agent and sodium carbonate as a flux, for ferrous sulphurated minerals of a single metal, **characterized by**:
- Establishing the number of iron gram atoms, or their equivalent in weight, required as a reducing agent, or facilitator of the atomic exchange among reactants, in the referred process of direct reduction of metals, by determining the number resulting from adding all sulphur atoms contained in the chemical formula of mineralogical compounds containing the metal or metals to be extracted. The number of iron gram atoms, or their equivalent in weight, that are considered an atomic compound in the referred mineralogical compounds, is deducted from it.
- Establishing the number of moles of sodium carbonate, or their equivalent in weight, required as a flux in the referred process of direct reduction of metals, by determining the number resulting from adding all sulphur atoms contained in the chemical formula of mineralogical compounds containing the metal or metals to be extracted.
- Establishing that the number of moles of ferrous oxide, or their equivalent in weight, obtained as a product in the process slag, is equal to the total number of iron atoms required as a reducing agent among the process reactants.
- Establishing that the number of moles of sodium sulphide and carbon dioxide, or their equivalent in weight, obtained as products in both the process slag and gaseous effluents, is equal to the total number of moles of sodium carbonate required as a flux among the process reactants.
- The above applies to cases in which concentrated sulphurated minerals containing the metal or metals to be extracted, as applicable, are smelted in the smelting furnace considered for the process. In these cases, iron is used as a reducing agent and sodium carbonate as a flux, resulting in molten or powdery metals, depending on the physical properties of the referred metals and where applicable, a slag of controlled composition consisting of ferrous oxide and sodium sulphide, and gaseous emissions of carbon dioxide. In order to have effective control over the slag composition, which is indispensable to enable regeneration and recycling of the reducing agent and flux, the following general reactions are established for the following cases, considering the following general definitions:
• **Fe** is a reactant element of zero oxidation state, which acts as a reducing agent or as a facilitator of the atomic exchange between sulphur and sodium, as the case may be, when added to the main reactor.
• **Na₂CO₃** is a chemical reactant compound called sodium carbonate, which is added to the main reactor as a flux.
• **Na₂S** is one of the slag compounds called sodium sulphide obtained as a product of the general chemical reaction and is highly soluble in water.
• **FeO** is the other slag compound called ferrous oxide, obtained as a product of the general chemical reaction and is insoluble in water.
• **CO₂** is the gaseous effluent called carbon dioxide, obtained as a product of the general chemical reaction.
For ferrous sulphurated minerals of a single metal:
MₓFe_{y}S_{z} + (z-y)Fe + zNa₂CO₃ → xM + zNa₂S + zFeO+ zCO₂
Where:
- **M** is the non-ferrous metal to be extracted including, but not limited to, copper, arsenic, lead, zinc.
- **MₓFe_{y}S_{z}** is the chemical formula established for the ferrous sulphurated mineral from which metal M is to be extracted.
- **x, y, z** indicate the number of atoms of iron, sulphur and metal M to be extracted, respectively, from MₓFe_{y}S_{z}, which are the basis of stoichiometric coefficients of the remaining reactants and the products obtained in the process.

9. A process for determining, in a process of direct metal reduction from ferrous and non-ferrous concentrated sulphurated minerals containing them, the necessary quantities of iron as a reducing agent and sodium carbonate as a flux, for ferrous and/or non-ferrous sulphurated minerals of single metal, with gold and/or silver, **characterized by**:
- Establishing the number of iron gram atoms, or their equivalent in weight, required as a reducing agent, or facilitator of the atomic exchange among reactants, in the referred process of direct reduction of metals, by determining the number resulting from adding all sulphur atoms contained in the chemical formula of mineralogical compounds containing the metal or metals to be extracted. The number of iron gram atoms, or their equivalent in weight, that are considered an atomic compound in the referred mineralogical compounds, is deducted from it.
- Establishing the number of moles of sodium carbonate, or their equivalent in weight, required as a flux in the referred process of direct reduction of metals, by determining the number resulting from adding all sulphur atoms contained in the chemical formula of mineralogical compounds containing the metal or metals to be extracted.
- Establishing that the number of moles of ferrous oxide, or their equivalent in weight, obtained as a product in the process slag, is equal to the total number of iron atoms required as a reducing agent among the process reactants.
- Establishing that the number of moles of sodium sulphide and carbon dioxide, or their equivalent in weight, obtained as products in both the process slag and gaseous effluents, is equal to the total number of moles of sodium carbonate required as a flux among the process reactants.
- The above applies to cases in which concentrated sulphurated minerals containing the metal or metals to be extracted, as applicable, are smelted in the smelting furnace considered for the process. In these cases, iron is used as a reducing agent and sodium carbonate as a flux, resulting in molten or powdery metals, depending on the physical properties of the referred metals and where applicable, a slag of controlled composition consisting of ferrous oxide and sodium sulphide, and gaseous emissions of carbon dioxide. In order to have effective control over the slag composition, which is indispensable to enable regeneration and recycling of the reducing agent and flux, the following general reactions are established for the following cases, considering the following general definitions:
• **Fe** is a reactant element of zero oxidation state, which acts as a reducing agent or as a facilitator of the atomic exchange between sulphur and sodium, as the case may be, when added to the main reactor.
• **Na₂CO₃** is a chemical reactant compound called sodium carbonate, which is added to the main reactor as a flux.
• **Na₂S** is one of the slag compounds called sodium sulphide obtained as a product of the general chemical reaction and is highly soluble in water.
• **FeO** is the other slag compound called ferrous oxide, obtained as a product of the general chemical reaction and is insoluble in water.
• **CO₂** is the gaseous effluent called carbon dioxide, obtained as a product of the general chemical reaction.
For ferrous and/or non-ferrous sulphurated minerals of a single metal, with gold and/or silver:
MₓFe_{y}S_{z}+ (Au,Ag)ₘ + nPb + (z-y)Fe + zNa₂CO₃ → → xM + m(Au,Ag) + nPb + zNa₂S + zFeO + zCO₂
Where:
- **M** is the non-ferrous metal to be extracted, including, but not limited to copper, arsenic, lead, zinc.
- **MₓFe_{y}S_{z}** is the chemical formula established for ferrous and non-ferrous sulphurated mineral (for y = 0) from which the associated M metal and precious metals are to be extracted.
- **x, y, z** indicate the number of atoms of iron, sulphur and metal M to be extracted, respectively, from MₓFe_{y}S_{z}, the stoichiometric coefficients of the remaining reactants and those of the products obtained in the process, depend on its values.
- **(Au,Ag)ₘ** represents the inclusions of gold (Au), silver (Ag) and electrum (Au/Ag) that are presented under number "m" within the MₓFe_{y}S_{z} mineral matrix.
- **Pb** represents the metal Lead which in the amount "n" is added together with reactants to be the final carrier of Gold and Silver.

10. A process for determining, in a process of direct reduction of metals from ferrous and non-ferrous concentrated sulphurated minerals containing them, the necessary quantities of iron as a reducing agent and sodium carbonate as a flux, for combinations of several ferrous and/or non-ferrous sulphurated minerals of a single metal, **characterized by**:
- Establishing the number of iron gram atoms, or their equivalent in weight, required as a reducing agent, or facilitator of the atomic exchange among reactants, in the referred process of direct reduction of metals, by determining the number resulting from adding all sulphur atoms contained in the chemical formula of mineralogical compounds containing the metal or metals to be extracted. The number of iron gram atoms, or their equivalent in weight, that are considered an atomic compound in the referred mineralogical compounds, is deducted from it.
- Establishing the number of moles of sodium carbonate, or their equivalent in weight, required as a flux in the referred process of direct reduction of metals, by determining the number resulting from adding all sulphur atoms contained in the chemical formula of mineralogical compounds containing the metal or metals to be extracted.
- Establishing that the number of moles of ferrous oxide, or their equivalent in weight, obtained as a product in the process slag, is equal to the total number of iron atoms required as a reducing agent among the process reactants.
- Establishing that the number of moles of sodium sulphide and carbon dioxide, or their equivalent in weight, obtained as products in both the process slag and gaseous effluents, is equal to the total number of moles of sodium carbonate required as a flux among the process reactants.
- The above applies to cases in which concentrated sulphurated minerals containing the metal or metals to be extracted, as applicable, are smelted in the smelting furnace considered for the process. In these cases, iron is used as a reducing agent and sodium carbonate as a flux, resulting in molten or powdery metals, depending on the physical properties of the referred metals and where applicable, a slag of controlled composition consisting of ferrous oxide and sodium sulphide, and gaseous emissions of carbon dioxide. In order to have effective control over the slag composition, which is indispensable to enable regeneration and recycling of the reducing agent and flux, the following general reactions are established for the following cases, considering the following general definitions:
• **Fe** is a reactant element of zero oxidation state, which acts as a reducing agent or as a facilitator of the atomic exchange between sulphur and sodium, as the case may be, when added to the main reactor.
• **Na₂CO₃** is a chemical reactant compound called sodium carbonate, which is added to the main reactor as a flux.
• **Na₂S** is one of the slag compounds called sodium sulphide obtained as a product of the general chemical reaction and is highly soluble in water.
• **FeO** is the other slag compound called ferrous oxide, obtained as a product of the general chemical reaction and is insoluble in water.
• **CO₂** is the gaseous effluent called carbon dioxide, obtained as a product of the general chemical reaction.
For combinations of several ferrous and/or non-ferrous sulphurated minerals of a single metal:
[(M1)ₐFe_{b}S_{c} + (c-b)Fe + cNa₂CO₃] + [(M2)ₓFe_{y}S_{z} + (z-y)Fe + zNa₂CO₃] → →a(M1) + x(M2) + (c + z)Na₂S + (c + z)FeO + (c + z)CO₂
which expressed otherwise is equal to:
(M1)ₐFe_{b}S_{c} + (M2)ₓFe_{y}S_{z} + [(c - b) + (z - y)]Fe + (c + z)Na₂CO₃ → →a(M1) + x(M2) + (c + z)Na₂S + (c + z)FeO + (c + z)CO₂
Where:
- **M1** and **M2** are the non-ferrous metals to be extracted, including, but not limited to copper, arsenic.
- **(M1)ₐFe_{b}S_{c}** and **(M2)ₓFe_{y}S_{z}** are the chemical formulas established for ferrous and/or non-ferrous sulphurated minerals (for y = 0), from which non-ferrous metals M1 and M2 are to be extracted.
- Subscripts **a, b, c** as well as **x, y, z** indicate the number of atoms of metals M1 and M2, Iron and Sulphur in (M1)ₐFe_{b}S_{c} and (M2)ₓFe_{y}S_{z}. The stoichiometric coefficients of the remaining reactants (reducing agent and flux) and those of the products obtained in the process (molten metals, slag, and gaseous effluent), depend on its values.

11. A process for determining, in a process of direct reduction of metals from ferrous and non-ferrous concentrated sulphurated minerals containing them, the necessary quantities of iron as a reducing agent and sodium carbonate as a flux, for ferrous and/or non-ferrous bimetallic sulphurated minerals, **characterized by**:
- Establishing the number of iron gram atoms, or their equivalent in weight, required as a reducing agent, or facilitator of the atomic exchange between reactants, in the referred process of direct reduction of metals, by determining the number resulting from adding all sulphur atoms contained in the chemical formula of mineralogical compounds containing the metal or metals to be extracted. The number of iron gram atoms, or their equivalent in weight, that are considered an atomic compound in the referred mineralogical compounds, is deducted from it.
- Establishing the number of moles of sodium carbonate, or their equivalent in weight, required as a flux in the referred process of direct reduction of metals, by determining the number resulting from adding all sulphur atoms contained in the chemical formula of mineralogical compounds containing the metal or metals to be extracted.
- Establishing that the number of moles of ferrous oxide, or their equivalent in weight, obtained as a product in the process slag, is equal to the total number of iron atoms required as a reducing agent among the process reactants.
- Establishing that the number of moles of sodium sulphide and carbon dioxide, or their equivalent in weight, obtained as products in both the process slag and gaseous effluents, is equal to the total number of moles of sodium carbonate required as a flux among the process reactants.
- The above applies to cases in which concentrated sulphurated minerals containing the metal or metals to be extracted, as applicable, are smelted in the smelting furnace considered for the process. In these cases, iron is used as a reducing agent and sodium carbonate as a flux, resulting in molten or powdery metals, depending on the physical properties of the referred metals and where applicable, a slag of controlled composition consisting of ferrous oxide and sodium sulphide, and gaseous emissions of carbon dioxide. In order to have effective control over the slag composition, which is indispensable to enable regeneration and recycling of the reducing agent and flux, the following general reactions are established for the following cases, considering the following general definitions:
• **Fe** is a reactant element of zero oxidation state, which acts as a reducing agent or as a facilitator of the atomic exchange between sulphur and sodium, as the case may be, when added to the main reactor.
• **Na₂CO₃** is a chemical reactant compound called sodium carbonate, which is added to the main reactor as a flux.
• **Na₂S** is one of the slag compounds called sodium sulphide obtained as a product of the general chemical reaction and is highly soluble in water.
• **FeO** is the other slag compound called ferrous oxide, obtained as a product of the general chemical reaction and is insoluble in water.
• **CO₂** is the gaseous effluent called carbon dioxide, obtained as a product of the general chemical reaction.
For ferrous and/or non-ferrous bimetallic sulphurated minerals:
(M1)ₐ(M2)_{b}Fe_{y}S_{z} + (z-y)Fe + zNa₂CO₃→ a(M1)b(M2) + zNa₂S + zFeO+ zCO₂
Where:
- **M1** and **M2** are the non-ferrous metals to be extracted, including, but not limited to, antimony, zinc, copper, silver, arsenic, cobalt.
- **(M1)ₐ(M2)_{b}Fe_{y}S_{z}** is the chemical formula established for ferrous and/or non-ferrous sulphurated mineral (for y = 0), from which non-ferrous metals M1 and M2 are to be extracted.
- Subscripts **a, b** as well as **y, z** indicate the number of atoms of metals M1 and M2 such as iron and sulphur, respectively, in (M1)ₐ(M2)_{b}Fe_{y}S_{z.} The stoichiometric coefficients of the remaining reactants (reducing agent and flux) and those of the products obtained in the process (molten metals, slag, and gaseous effluent), depend on its values.

12. A process for determining, in a process of direct reduction of metals from ferrous and non-ferrous concentrated sulphurated minerals containing them, the necessary quantities of iron as a reducing agent and sodium carbonate as a flux, for combinations of ferrous and non-ferrous bimetallic sulphurated minerals **characterized by**:
- Establishing the number of iron gram atoms, or their equivalent in weight, required as a reducing agent, or facilitator of the atomic exchange between reactants, in the referred process of direct reduction of metals, by determining the number resulting from adding all sulphur atoms contained in the chemical formula of mineralogical compounds containing the metal or metals to be extracted. The number of iron gram atoms, or their equivalent in weight, that are considered an atomic compound in the referred mineralogical compounds, is deducted from it.
- Establishing the number of moles of sodium carbonate, or their equivalent in weight, required as a flux in the referred process of direct reduction of metals, by determining the number resulting from adding all sulphur atoms contained in the chemical formula of mineralogical compounds containing the metal or metals to be extracted.
- Establishing that the number of moles of ferrous oxide, or their equivalent in weight, obtained as a product in the process slag, is equal to the total number of iron atoms required as a reducing agent among the process reactants.
- Establishing that the number of moles of sodium sulphide and carbon dioxide, or their equivalent in weight, obtained as products in both the process slag and gaseous effluents, is equal to the total number of moles of sodium carbonate required as a flux among the process reactants.
- The above applies to cases in which concentrated sulphurated minerals containing the metal or metals to be extracted, as applicable, are smelted in the smelting furnace considered for the process. In these cases, iron is used as a reducing agent and sodium carbonate as a flux, resulting in molten or powdery metals, depending on the physical properties of the referred metals and where applicable, a slag of controlled composition consisting of ferrous oxide and sodium sulphide, and gaseous emissions of carbon dioxide. In order to have effective control over the composition of slag, which is indispensable to enable regeneration and recycling of the reducing agent and flux, the following general reactions are established for the following cases, considering the following general definitions:
• **Fe** is a reactant element of zero oxidation state, which acts as a reducing agent or as a facilitator of the atomic exchange between sulphur and sodium, as the case may be, when added to the main reactor.
• **Na₂CO₃** is a chemical reactant compound called sodium carbonate, which is added to the main reactor as a flux.
• **Na₂S** is one of the slag compounds called sodium sulphide obtained as a product of the general chemical reaction and is highly soluble in water.
• **FeO** is the other slag compound called ferrous oxide, obtained as a product of the general chemical reaction and is insoluble in water.
• **CO₂** is the gaseous effluent called carbon dioxide, obtained as a product of the general chemical reaction.
For combinations of ferrous and non-ferrous bimetallic sulphurated minerals:
[(M1)ₐ(M2)_{b}Fe_{c}S_{d} + (M3)_{w}(M4)ₓFe_{y}S_{z} + [(d - c)+(z - y)]Fe + (d+z)Na₂CO₃] → → a(M1) + b(M2) + w(M3) x (M4) + (d+z)Na₂S + (d+z)FeO + (d+z)CO₂
Where:
- **M1, M2, M3** and **M4** are the non-ferrous metals to be extracted, including, but not limited to, antimony, zinc, copper, silver, arsenic, cobalt.
- (M1)ₐ(M2)_{b}Fe_{c}S_{d} and (M3)_{w}(M4)ₓFe_{y}S_{z} are the chemical formulas established for ferrous and non-ferrous sulphurated minerals, from which non-ferrous metals M1, M2, M3 and M4 are to be extracted.
- Subscripts **a, b, c, d** as well as **w, x, y, z** indicate the number of atoms of metals M1, M2, M3 and M4, Iron and Sulphur, respectively, in (M1)ₐ(M2)_{b}Fe_{c}S_{d} and (M3)_{w}(M4)ₓFe_{y}S_{z}. The stoichiometric coefficients of the remaining reactants (reducing agent and flux) and those of the products obtained in the process (molten metals, slag, and gaseous effluent), depend on its values.
Note that the above stoichiometric formulation is valid even when any (or all) of the following cases are present:
• When the chemical formulas of bimetallic sulphurated minerals have a non-ferrous metal in common; i.e. when (M1, M2) is equal in part to (M3, M4).
• When in the combination of bimetallic sulphurated minerals, one of the sulphurated minerals is ferrous and the other sulphurated mineral is non-ferrous.
In this regard, the simultaneous occurrence of both cases above would have the following stoichiometric formulation, where M4=M2 and y=0.
[(M1)ₐ(M2)_{b}Fe_{c}S_{d} + (M3)_{w}(M2)ₓS_{z} + [(d - c)+(z)]Fe + (d+z)Na₂CO₃] → → a(M1) + (b+x)(M2) + w(M3) + (d+z)Na₂S + (d+z)FeO + (d+z)CO₂
